# EUROPEAN PATENT APPLICATION

(11) **EP 4 307 140 A1**
(43) Date of publication of application: **17.01.2024**
(21) Application number: 21930238.7
(22) Date of filing: 12.03.2021
(51) Int. Cl.: G06F 21/34, G06F 21/32

(54) **RELAY CONTROL METHOD, RELAY CONTROL PROGRAM, RELAY CONTROL DEVICE, AND INFORMATION PROCESSING SYSTEM**

(71) Applicant: FUJITSU LIMITED, Kawasaki-shi, Kanagawa 211-8588 (JP)
(72) Inventor: HANADA, Yuichi, Kawasaki-shi, Kanagawa 211-8588 (JP); SHINZAKI, Takashi, Kawasaki-shi, Kanagawa 211-8588 (JP); ONOZU, Takayuki, Kawasaki-shi, Kanagawa 211-8588 (JP); SUEYASU, Yoshitaka, Kawasaki-shi, Kanagawa 211-8588 (JP); ISHISAKI, Wataru, Kanazawa-shi, Ishikawa 921-8611 (JP)
(74) Representative: Hoffmann Eitle
(86) International application number: PCT/JP2021/010209
(87) International publication number: WO 2022/190388

(57) **Abstract**

A relay control device (100) receives a waiting notification, from a first device (101). Upon receiving the waiting notification, the relay control device (100) transitions to a state where waiting is performed without transmitting a response to the waiting notification, to the first device (101). The relay control device (100) receives an authentication request from a second device (102). In a case of a state where the authentication request is received and waiting is performed without transmitting the response to the waiting notification, the relay control device (100) transmits a response to the received waiting notification, including the received authentication request, to the first device (101).

## Description

### FIELD

The present invention relates to a relay control method, a relay control program, a relay control device, and an information processing system.

### BACKGROUND

Typically, there is a technique using a virtual environment realized by an in-house computer included in an in-house network, from an external computer. Here, for example, a situation is considered where it is attempted to use an authentication function of the external computer so as to log in some service, in the virtual environment realized by the in-house computer.

For example, there is related art in which a virtual machine monitor in a virtual machine execution environment receives an input of user's authentication information via a predetermined interface, collates the authentication information with information for authentication stored in a storage unit in advance, and authenticates a user.

### CITATION LIST

### PATENT DOCUMENT

Patent Document 1: Japanese Laid-open Patent Publication No. 2010-097567

### SUMMARY

### [TECHNICAL PROBLEM]

However, with the related art, it is difficult to use the authentication function of the external computer, in the virtual environment realized by the in-house computer. For example, the in-house computer cannot actively communicate with the external computer, depending on a private IP address of the external computer. Therefore, it is not possible to use the authentication function of the external computer, in the virtual environment realized by the in-house computer.

In one aspect, an object of the present invention is to enable transmission of an authentication request from a virtual environment to a physical device.

### [SOLUTION TO PROBLEM]

According to one embodiment, a relay control method, a relay control program, a relay control device, and an information processing system are proposed that receive a waiting notification, from a first device that is able to provide an authentication function, transition to a state where waiting is performed without transmitting a response to the waiting notification to the first device upon receiving the waiting notification, receive an authentication request from a second device that has a virtual environment, and in a case of a state where the authentication request is received and waiting is performed without transmitting the response to the waiting notification, transmit the response to the received waiting notification, including the received authentication request, to the first device.

According to an aspect of the embodiments, a relay control method in which a computer executes processing includes receiving a waiting notification, from a first device that is capable of providing an authentication function; upon receiving the waiting notification, transitioning to a state where waiting is performed without transmitting a response to the waiting notification to the first device; receiving an authentication request from a second device that has a virtual environment; and in a case of a state where the authentication request is received and waiting is performed without transmitting the response to the waiting notification, transmitting the response to the received waiting notification, that includes the received authentication request, to the first device.

### [ADVANTAGEOUS EFFECTS OF INVENTION]

According to an aspect, it is possible to transmit an authentication request from a virtual environment to a physical device.

### BRIEF DESCRIPTION OF DRAWINGS

FIG. 1 is an explanatory diagram illustrating an example of a relay control method according to an embodiment;
FIG. 2 is an explanatory diagram illustrating an example of an information processing system 200;
FIG. 3 is an explanatory diagram illustrating a specific example of the information processing system 200;
FIG. 4 is a block diagram illustrating a hardware configuration example of a relay control device 100;
FIG. 5 is an explanatory diagram illustrating an example of storage content of a state management table 500;
FIG. 6 is a block diagram illustrating a hardware configuration example of an authentication-side device 201;
FIG. 7 is a block diagram illustrating a hardware configuration example of a virtual-side device 202;
FIG. 8 is a block diagram illustrating a functional configuration example of the information processing system 200;
FIG. 9 is an explanatory diagram (part 1) illustrating a specific example of a functional configuration of the information processing system 200 in a first operation example;
FIG. 10 is an explanatory diagram (part 2) illustrating a specific example of the functional configuration of the information processing system 200 in the first operation example;
FIG. 11 is an explanatory diagram (part 1) illustrating an example of a change in the storage content of the state management table 500;
FIG. 12 is an explanatory diagram (part 2) illustrating an example of the change in the storage content of the state management table 500;
FIG. 13 is an explanatory diagram illustrating a flow of the first operation example of the information processing system 200;
FIG. 14 is an explanatory diagram (part 1) illustrating a specific example of the first operation example of the information processing system 200;
FIG. 15 is an explanatory diagram (part 2) illustrating a specific example of the first operation example of the information processing system 200;
FIG. 16 is an explanatory diagram (part 3) illustrating a specific example of the first operation example of the information processing system 200;
FIG. 17 is an explanatory diagram (part 4) illustrating a specific example of the first operation example of the information processing system 200;
FIG. 18 is an explanatory diagram (part 5) illustrating a specific example of the first operation example of the information processing system 200;
FIG. 19 is a sequence diagram (part 1) illustrating an example of an overall processing procedure of the first operation example;
FIG. 20 is a sequence diagram (part 2) illustrating an example of the overall processing procedure of the first operation example;
FIG. 21 is an explanatory diagram (part 1) illustrating an example in a case where there is a plurality of virtual environments;
FIG. 22 is an explanatory diagram (part 2) illustrating an example in a case where there is the plurality of virtual environments;
FIG. 23 is a sequence diagram (part 1) illustrating an example of an overall processing procedure of a second operation example;
FIG. 24 is a sequence diagram (part 2) illustrating an example of the overall processing procedure of the second operation example;
FIG. 25 is an explanatory diagram illustrating a specific example of a functional configuration of the information processing system 200 in a third operation example;
FIG. 26 is an explanatory diagram (part 1) illustrating a specific example of the third operation example of the information processing system 200;
FIG. 27 is an explanatory diagram (part 2) illustrating a specific example of the third operation example of the information processing system 200;
FIG. 28 is an explanatory diagram (part 3) illustrating a specific example of the third operation example of the information processing system 200;
FIG. 29 is an explanatory diagram (part 4) illustrating a specific example of the third operation example of the information processing system 200;
FIG. 30 is an explanatory diagram (part 5) illustrating a specific example of the third operation example of the information processing system 200;
FIG. 31 is an explanatory diagram (part 6) illustrating a specific example of the third operation example of the information processing system 200;
FIG. 32 is an explanatory diagram (part 7) illustrating a specific example of the third operation example of the information processing system 200;
FIG. 33 is an explanatory diagram (part 8) illustrating a specific example of the third operation example of the information processing system 200;
FIG. 34 is an explanatory diagram (part 9) illustrating a specific example of the third operation example of the information processing system 200;
FIG. 35 is a sequence diagram (part 1) illustrating an example of an overall processing procedure of the third operation example;
FIG. 36 is a sequence diagram (part 2) illustrating an example of the overall processing procedure of the third operation example; and
FIG. 37 is a sequence diagram (part 3) illustrating an example of the overall processing procedure of the third operation example.

### DESCRIPTION OF EMBODIMENTS

Hereinafter, embodiments of a relay control method, a relay control program, a relay control device, and an information processing system according to the present invention will be described in detail with reference to the drawings.

### (Example of Relay Control Method According to Embodiment)

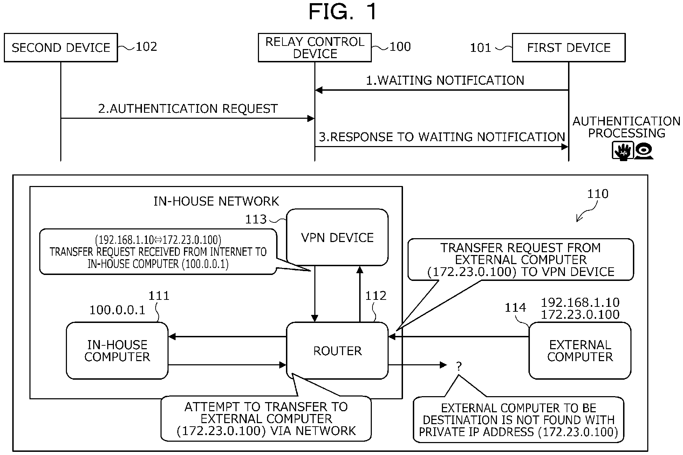

FIG. 1 is an explanatory diagram illustrating an example of a relay control method according to an embodiment. A relay control device 100 is a computer that can communicate with a first device 101 and a second device 102 and enables the second device 102 to transmit an authentication request to the first device 101.

The first device 101 is a computer that can provide an authentication function. The authentication function uses, for example, biometric information. The first device 101 has, for example, the authentication function. For example, the first device 101 can communicate with another computer having an authentication function. The first device 101 is, for example, an external computer. The second device 102 is a computer having a virtual environment. The second device 102 is, for example, an in-house computer included in an in-house network.

Here, it is considered that the first device 101 accesses the second device 102 and uses the virtual environment of the second device 102. Moreover, for example, a situation is considered in which the authentication function provided by the first device 101 is used to log in some service in the virtual environment of the second device 102.

Specifically, in an information-oriented society, there is a case where it is desired that the external computer uses the virtual environment of the in-house computer, due to an increasing demands of telework, a security risk of holding data in the external computer, or the like. Then, for example, a situation is considered in which the authentication function of the external computer is used in the virtual environment of the in-house computer and authentication processing using the biometric information is executed, in order to reduce a password management load.

However, typically, it is difficult to use the authentication function of the external computer in the virtual environment of the in-house computer. For example, the in-house computer cannot actively communicate with the external computer, depending on a private IP address of the external computer. Therefore, it is not possible to transmit the authentication request from the in-house computer to the external computer and to use the authentication function of the external computer in the virtual environment realized by the in-house computer.

Typically, specifically, a situation is considered in which a network configuration 110 is formed by an in-house network including an in-house computer 111, a router 112, and a virtual private network (VPN) device 113 and an external computer.

In this situation, it is considered that an external computer 114 can actively communicate with the in-house computer 111. For example, the external computer 114 can transmit a request to the VPN device 113, using a global IP address of the VPN device 113, via the router 112. Then, in a case of receiving the request, the VPN device 113 can issue the global IP address to the external computer 114. The VPN device 113 can hold the issued global IP address and the private IP address of the external computer 114 in a mapping table, in association with each other. Furthermore, the VPN device 113 can transfer the received request to the in-house computer 111.

On the other hand, it is considered that it is difficult for the in-house computer 111 to actively communicate with the external computer 114. For example, the in-house computer 111 attempts to transmit a request to the external computer 114, using the private IP address of the external computer 114, via the router 112. At this time, since the router 112 does not include the mapping table, the router 112 transfers the request on a network, using the private IP address of the external computer 114. However, since it is not possible to find the external computer 114 to be a destination with the private IP address, the request is discarded on the network.

On the other hand, for example, a method called smartaccess virtual (SA/V) is considered. The SA/V is a method using a software development kit (SDK) provided by a vendor of the virtual environment and enabling communication of an authentication request and an authentication result between a computer having the authentication function and a computer having the virtual environment. With this method, there is a problem in that a workload of a worker who copes with upgrade of a version increases, each time when a version of the virtual environment, the SDK, or the like is upgraded. Furthermore, it is considered that the upgrade of the version of the virtual environment, the SDK, or the like causes an operation failure of the computer having the authentication function or the computer having the virtual environment.

Furthermore, for example, a method called universal serial bus (USB) redirection is considered. The USB redirection is a method for enabling acquisition of sensor information or the like of the computer having the authentication function in the virtual environment, as well as screen information and cursor information of the virtual environment, and attempting to execute the authentication processing in the virtual environment. With this method, there is a problem in that an amount of communication between the computer having the authentication function and the computer having the virtual environment increases. As a result, it is considered that an operation delay of the virtual environment occurs.

Furthermore, for example, a method is considered in which the computer having the authentication function performs polling on the computer having the virtual environment so that the computer having the authentication function inquires whether or not the computer having the virtual environment has an authentication request. With this method, there is a problem in that an amount of communication between the computer having the authentication function and the computer having the virtual environment increases. As a result, it is considered that an operation delay of the virtual environment occurs. Then, there is a problem in that, if a polling time interval is shortened in order to suppress an increase in the communication amount, this increases a time lag when the authentication processing is executed in response to the authentication request.

For these reasons, it is desirable to transmit the authentication request from the in-house computer to the external computer so as to be applicable regardless of a combination of a type of the virtual environment included in the in-house computer and a type of an operating system (OS) or the like of the external computer and so as to be able to suppress the increase in the communication amount. Therefore, in the present embodiment, a relay control method that enables transmission of the authentication request from the virtual environment to the physical device will be described. Specifically, according to the relay control method, it is possible to transmit the authentication request from the in-house computer to the external computer.

In FIG. 1, (1:1) the relay control device 100 receives a waiting notification from the first device 101. The waiting notification is a notification indicating that the first device 101 is in a state of waiting for reception of the authentication request. The waiting notification may include attribute information regarding the first device 101. The type of the waiting notification is a request. The relay control device 100 exists, for example, in the in-house network and receives the waiting notification from the external computer.

Upon receiving the waiting notification, the relay control device 100 transitions to a state in which waiting is performed without transmitting a response to the waiting notification to the first device 101. For example, upon receiving the waiting notification, the relay control device 100 transitions to a state in which waiting is performed without transmitting the response to the waiting notification, to the external computer. As a result, hereinafter, in a case where it is desired to transmit specific information to the first device 101, the relay control device 100 can transmit the specific information included in the response to the waiting notification, to the first device 101.

(1:2) The relay control device 100 receives an authentication request from the second device 102. The authentication request is a request for executing predetermined authentication processing, using the authentication function of the first device 101. The authentication request may include the attribute information regarding the first device 101. The relay control device 100 receives the authentication request, for example, from the in-house computer.

(1:3) In a case where the relay control device 100 is in a state where the authentication request is received and waiting is performed without transmitting the response to the waiting notification, the relay control device 100 transmits a response to the received waiting notification, including the received authentication request, to the first device 101. For example, the relay control device 100 transmits the response to the received waiting notification, including the received authentication request, to the external computer. For example, the first device 101 executes the authentication processing in response to the authentication request. As a result, the relay control device 100 can relay the second device 102 and the first device 101 so as to transmit the authentication request from the second device 102 to the first device 101.

For example, by maintaining a state where the relay control device 100 does not transmit the response to the waiting notification and can actively communicate with the first device 101, the relay control device 100 can transfer the authentication request received from the second device 102 to the first device 101. For example, the relay control device 100 can transfer the authentication request received from the second device 102 to the first device 101, regardless of a combination of a type of an OS of the first device 101 and a type of the virtual environment of the second device 102. Therefore, the relay control device 100 can suppress an increase in a workload of an administrator of the relay control device 100, an administrator of the first device 101, an administrator of the second device 102, or the like.

For example, the relay control device 100 can make the first device 101 not to perform polling and can suppress the increase in the communication amount. For example, the relay control device 100 can suppress an increase in a required time from the reception of the authentication request from the second device 102 to the transfer of the authentication request to the first device 101. Specifically, the relay control device 100 can avoid a situation in which the required time from the reception of the authentication request from the second device 102 to the transfer of the authentication request to the first device 101 increases due to a time interval at which polling is performed.

For example, the relay control device 100 can improve an execution efficiency of the authentication processing. Specifically, the relay control device 100 can make the first device 101 execute the authentication processing. Therefore, specifically, the relay control device 100 does not make the second device 102 execute the authentication processing, and it is not needed for the second device 102 to acquire various types of information used for the authentication processing. Therefore, the relay control device 100 can execute the authentication processing regardless of a communication delay between the first device 101 and the second device 102 and can improve the execution efficiency of the authentication processing.

### (Example of Information Processing System 200)

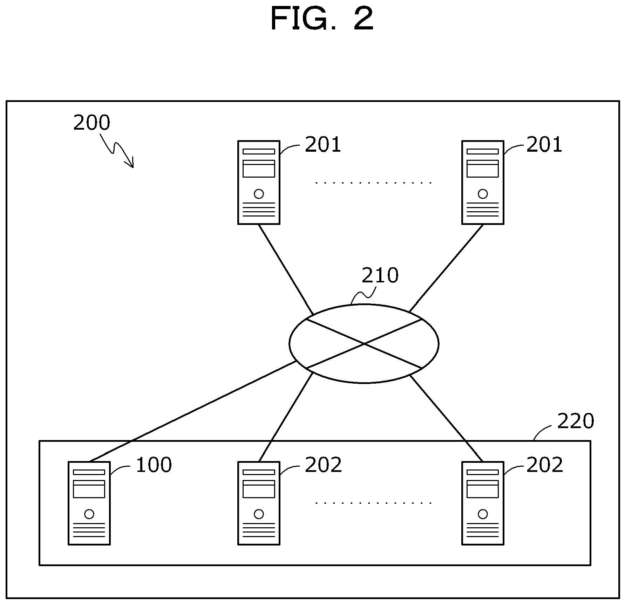

Next, an example of an information processing system 200, to which the relay control device 100 illustrated in FIG. 1 is applied, will be described with reference to FIG. 2.

FIG. 2 is an explanatory diagram illustrating an example of the information processing system 200. In FIG. 2, the information processing system 200 includes the relay control device 100, one or more authentication-side devices 201, and one or more virtual-side devices 202.

In the information processing system 200, the relay control device 100 and the authentication-side device 201 are coupled via a wired or wireless network 210. The network 210 includes, for example, a local area network (LAN), a wide area network (WAN), the Internet, or the like. The relay control device 100 and the authentication-side device 201 are coupled, for example, via the Internet.

In the information processing system 200, the relay control device 100 and the virtual-side device 202 are coupled via the wired or wireless network 210. The relay control device 100 and the virtual-side device 202 are coupled, for example, via a LAN. Specifically, the relay control device 100 and the virtual-side device 202 are included in the same in-house network 220 and are coupled via a LAN of the in-house network 220.

The relay control device 100 enables transmission of the authentication request from the virtual-side device 202 to the authentication-side device 201. It is assumed that the relay control device 100 can actively communicate with the virtual-side device 202. For example, the relay control device 100 receives a standby state notification from the authentication-side device 201. Upon receiving the standby state notification, the relay control device 100 does not transmit a response to the standby state notification.

For example, the relay control device 100 receives the authentication request from the virtual-side device 202. For example, upon receiving the authentication request, the relay control device 100 transmits the response to the standby state notification, including the received authentication request, to the authentication-side device 201. The relay control device 100 receives, for example, an authentication result obtained by executing the authentication processing, from the authentication-side device 201. For example, upon receiving the authentication result obtained by executing the authentication processing, the relay control device 100 transmits the authentication result obtained by executing the authentication processing, to the virtual-side device 202. The relay control device 100 is, for example, a server, a personal computer (PC), or the like.

The authentication-side device 201 is a computer that can provide the authentication function. For example, the authentication-side device 201 transmits the standby state notification to the relay control device 100. The authentication-side device 201 receives the response to the standby state notification including the authentication request, from the relay control device 100. The authentication-side device 201 executes the authentication processing, in response to the authentication request. The authentication-side device 201 transmits the authentication result obtained by executing the authentication processing, to the relay control device 100. The authentication-side device 201 corresponds to the first device 101, for example. The authentication-side device 201 is, for example, a server, a PC, a tablet terminal, a smartphone, or the like.

The virtual-side device 202 is a computer that can provide the virtual environment. For example, the virtual-side device 202 transmits the authentication request, to the relay control device 100. For example, the virtual-side device 202 receives the authentication result obtained by executing the authentication processing, from the relay control device 100. The virtual-side device 202 uses, for example, the authentication result obtained by executing the authentication processing. The virtual-side device 202 corresponds to the second device 102, for example. The virtual-side device 202 is, for example, a server, a PC, or the like.

Here, a case has been described where the relay control device 100 can actively communicate with the virtual-side device 202. However, the present invention is not limited to this. For example, there may be a case where the relay control device 100 cannot actively communicate with the virtual-side device 202. In this case, the relay control device 100 does not transmit the response to the authentication request, when receiving the authentication request. Then, when receiving the authentication result obtained by executing the authentication processing, the relay control device 100 transmits the response to the authentication request, including the authentication result obtained by executing the authentication processing, to the virtual-side device 202.

### (Specific Example of Information Processing System 200)

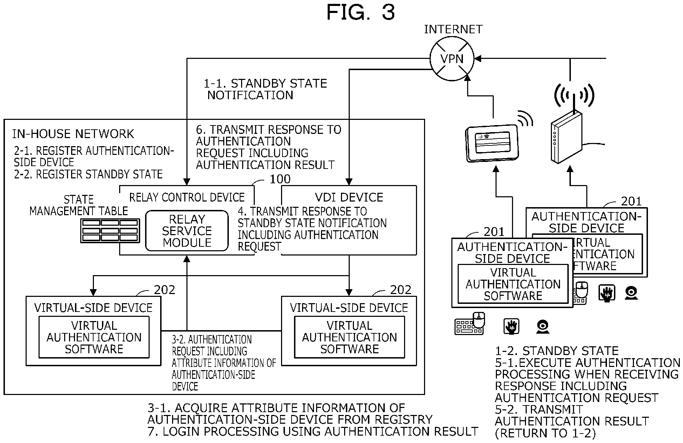

Next, a specific example of the information processing system 200, to which the relay control device 100 illustrated in FIG. 1 is applied, will be described with reference to FIG. 3.

FIG. 3 is an explanatory diagram illustrating the specific example of the information processing system 200. In FIG. 3, the information processing system 200 includes the one or more virtual-side devices 202, the relay control device 100, and a virtual desktop infrastructure (VDI) device, included in the in-house network. The information processing system 200 further includes one or more authentication-side devices 201 existing outside.

In the information processing system 200, the relay control device 100 and the authentication-side device 201 are coupled via the Internet, for example, using the VPN. Furthermore, the VDI device and the authentication-side device 201 are coupled via the Internet, for example, using the VPN. The relay control device 100 and the virtual-side device 202 are coupled, for example, via a LAN. The VDI device and the virtual-side device 202 are coupled, for example, via the LAN.

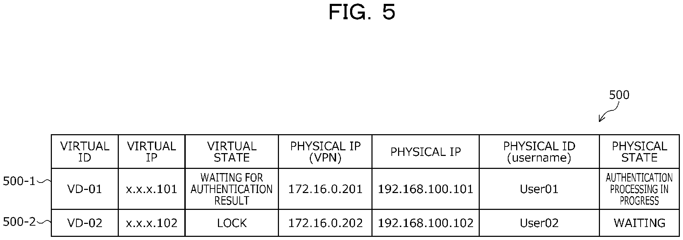

The relay control device 100 includes a relay service module. The relay control device 100 executes various types of processing, with the relay service module. The relay control device 100 includes a state management table 500. The state management table 500 is a table that manages a state of the authentication-side device 201. The state management table 500 manages, for example, whether or not the authentication-side device 201 is in a state of waiting for the authentication request. The state management table 500 further manages which virtual-side device 202 corresponds to which authentication-side device 201. An example of the state management table 500 will be specifically described with reference to FIG. 5.

The authentication-side device 201 includes virtual authentication software. The virtual authentication software is software used to execute the authentication processing. The authentication-side device 201 accesses the VDI device and uses the virtual environment of the virtual-side device 202. The VDI device is a computer that makes the authentication-side device 201 use the virtual environment of the virtual-side device 202. The virtual-side device 202 includes virtual authentication software. The virtual authentication software is software used to use the authentication result obtained by executing the authentication processing.

(3:1-1) When the authentication-side device 201 can receive the authentication request, the authentication-side device 201 transmits a standby state notification including attribute information regarding the own device, to the relay control device 100. (3:1-2) The authentication-side device 201 transitions to a standby state. The standby state is a state of waiting for the authentication request from the virtual-side device 202, transferred from the relay control device 100.

(3:2-1) Upon receiving the standby state notification, the relay control device 100 registers the attribute information regarding the authentication-side device 201, included in the standby state notification, in the state management table 500. (3:2-2) The relay control device 100 registers that the authentication-side device 201 is in the standby state, in the state management table 500, in association with the registered attribute information regarding the authentication-side device 201. Furthermore, after receiving the standby state notification, the relay control device 100 does not transmit a response to the standby state notification.

(3:3-1) The virtual-side device 202 acquires the attribute information regarding the authentication-side device 201 using the virtual environment provided by the own device, from a registry. (3:3-2) In a case where it is attempted to use the authentication processing in the virtual environment provided by the own device, the virtual-side device 202 transmits the authentication request including the acquired attribute information regarding the authentication-side device 201, to the relay control device 100.

(3:4) The relay control device 100 receives the authentication request. The relay control device 100 refers to the state management table 500, using the attribute information regarding the authentication-side device 201 included in the received authentication request, as a key, specifies the authentication-side device 201 that transmits the authentication request, and determines whether or not the specified authentication-side device 201 is in the standby state. If the relay control device 100 is in the standby state, the relay control device 100 transmits a response to the standby state notification, including the authentication request, to the specified authentication-side device 201.

Furthermore, after receiving the authentication request, the relay control device 100 does not transmit the response to the authentication request. Furthermore, the relay control device 100 registers the attribute information regarding the virtual environment in the state management table 500, in association with the attribute information regarding the specified authentication-side device 201. Furthermore, the relay control device 100 registers that the authentication-side device 201 is executing the authentication processing, in the state management table 500, in association with the attribute information regarding the specified authentication-side device 201.

(3:5-1) The authentication-side device 201 receives the response to the standby state notification. The authentication-side device 201 extracts the authentication request included in received response to the standby state notification. The authentication-side device 201 uses the virtual authentication software, in response to the extracted authentication request, and executes the authentication processing. (3:5-2) The authentication-side device 201 transmits the authentication result obtained by executing the authentication processing, including the attribute information regarding the own device, to the relay control device 100.

(3:6) The relay control device 100 receives the authentication result obtained by executing the authentication processing, from the authentication-side device 201. The relay control device 100 refers to the state management table 500, using the attribute information regarding the authentication-side device 201 included in the authentication result obtained by executing the authentication processing as a key, and specifies the virtual-side device 202 that transmits the authentication result obtained by executing the authentication processing. The relay control device 100 transmits the response to the authentication request, including the received authentication result obtained by executing the authentication processing, to the specified virtual-side device 202. The relay control device 100 registers that the authentication-side device 201 is in the standby state, in the state management table 500, in association with the attribute information regarding the authentication-side device 201.

(3:7) The virtual-side device 202 receives the authentication result obtained by executing the authentication processing. The virtual-side device 202 executes predetermined processing, based on the authentication result obtained by executing the authentication processing, using the virtual authentication software. For example, the virtual-side device 202 executes login processing associated with personal authentication, based on the authentication result obtained by executing the authentication processing, using the virtual authentication software. As a result, the relay control device 100 can transmit the authentication request from the virtual-side device 202, to the authentication-side device 201.

### (Hardware Configuration Example of Relay Control Device 100)

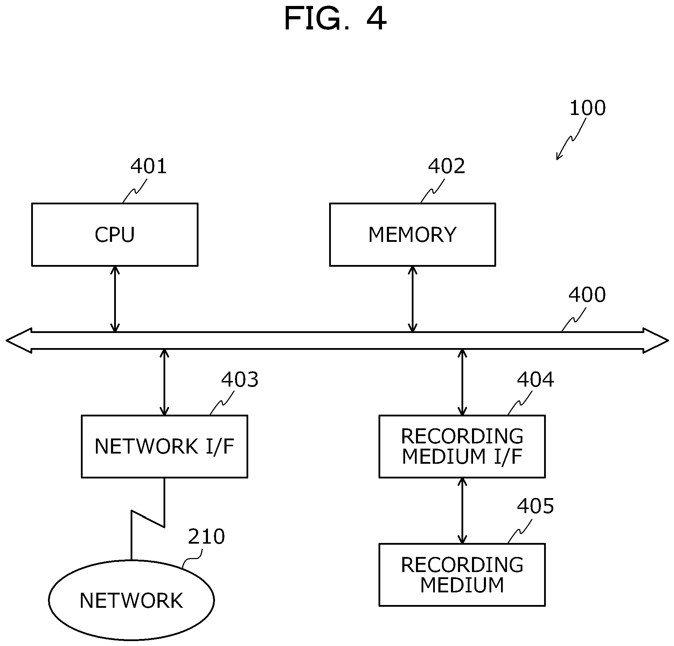

Next, a hardware configuration example of the relay control device 100 will be described with reference to FIG. 4.

FIG. 4 is a block diagram illustrating a hardware configuration example of the relay control device 100. In FIG. 4, the relay control device 100 includes a central processing unit (CPU) 401, a memory 402, a network interface (I/F) 403, a recording medium I/F 404, and a recording medium 405. In addition, the individual components are coupled to each other by a bus 400.

Here, the CPU 401 performs overall control of the relay control device 100. For example, the memory 402 includes a read only memory (ROM), a random access memory (RAM), a flash ROM, or the like. Specifically, for example, the flash ROM or the ROM stores various programs, and the RAM is used as a work area for the CPU 401. The programs stored in the memory 402 are loaded into the CPU 401 to cause the CPU 401 to execute coded processing.

The network I/F 403 is coupled to the network 210 through a communication line and is coupled to another computer via the network 210. Then, the network I/F 403 manages an interface between the network 210 and an inside, and controls input and output of data to and from another computer. The network I/F 403 is, for example, a modem, a LAN adapter, or the like.

The recording medium I/F 404 controls reading/writing of data from/to the recording medium 405 under the control of the CPU 401. The recording medium I/F 404 is, for example, a disk drive, a solid state drive (SSD), a USB port, or the like. The recording medium 405 is a nonvolatile memory that stores data written under the control of the recording medium I/F 404. The recording medium 405 is, for example, a disk, a semiconductor memory, a USB memory, or the like. The recording medium 405 may be attachable to and detachable from the relay control device 100.

For example, the relay control device 100 may include a keyboard, a mouse, a display, a printer, a scanner, a microphone, a speaker, or the like, as well as the components described above. Furthermore, the relay control device 100 may include the plurality of recording medium I/Fs 404 and the plurality of recording media 405. Furthermore, the relay control device 100 does not have to include the recording medium I/F 404 and the recording medium 405.

### (Storage Content of State Management Table 500)

Next, an example of storage content of the state management table 500 will be described with reference to FIG. 5. The state management table 500 is, for example, implemented by a storage area such as the memory 402 or the recording medium 405 of the relay control device 100 illustrated in FIG. 4.

FIG. 5 is an explanatory diagram illustrating an example of the storage content of the state management table 500. As illustrated in FIG. 5, the state management table 500 includes fields of a virtual ID, a virtual IP, a virtual state, a physical IP (VPN), a physical IP, a physical ID, and a physical state. In the state management table 500, by setting information in each field for each authentication-side device 201, state management information is stored as a record 500-a. The reference a is an arbitrary integer.

In the field of the virtual ID, a virtual ID used to identify a virtual environment is set. In the field of the virtual IP, a virtual IP that is an IP address allocated to the virtual environment is set. In the field of the virtual state, a state of the virtual environment is set. The state of the virtual environment is, for example, waiting for an authentication result, locking, or the like.

In the field of the physical IP (VPN), a physical IP (VPN) that is an IP address allocated to the authentication-side device 201 by the VPN is set. In the field of the physical IP, a physical IP that is an IP address allocated to the authentication-side device 201 is set. In the field of the physical ID, a physical ID used to identify the authentication-side device 201 is set. In the field of the physical state, a state of the authentication-side device 201 is set. The state of the authentication-side device 201 is, for example, authentication processing in progress, waiting, or the like.

### (Hardware Configuration Example of Authentication-side Device 201)

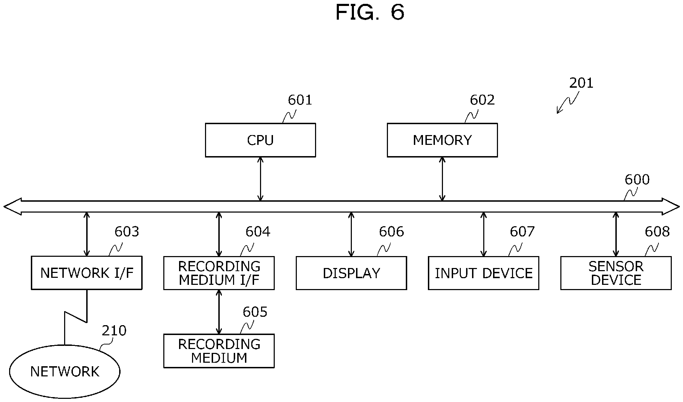

Next, a hardware configuration example of the authentication-side device 201 included in the relay control system illustrated in FIG. 2, will be described with reference to FIG. 6.

FIG. 6 is a block diagram illustrating a hardware configuration example of the authentication-side device 201. In FIG. 6, the authentication-side device 201 includes a CPU 601, a memory 602, a network I/F 603, a recording medium I/F 604, a recording medium 605, a display 606, an input device 607, and a sensor device 608. Furthermore, the individual components are coupled to each other by a bus 600.

Here, the CPU 601 performs overall control of the authentication-side device 201. For example, the memory 602 includes a ROM, a RAM, a flash ROM, or the like. Specifically, for example, the flash ROM or the ROM stores various programs, and the RAM is used as a work area for the CPU 601. The programs stored in the memory 602 are loaded into the CPU 601 to cause the CPU 601 to execute coded processing.

The network I/F 603 is coupled to the network 210 through a communication line and is coupled to another computer via the network 210. Then, the network I/F 603 manages an interface between the network 210 and an inside, and controls input and output of data to and from another computer. The network I/F 603 is, for example, a modem, a LAN adapter, or the like.

The recording medium I/F 604 controls reading/writing of data from/to the recording medium 605 under the control of the CPU 601. For example, the recording medium I/F 604 is a disk drive, an SSD, a USB port, or the like. The recording medium 605 is a nonvolatile memory that stores data written under the control of the recording medium I/F 604. The recording medium 605 is, for example, a disk, a semiconductor memory, a USB memory, or the like. The recording medium 605 may be attachable to and detachable from the authentication-side device 201.

The display 606 displays data such as documents, images, or function information, as well as a cursor, an icon, or a tool box. The display 606 is, for example, a cathode ray tube (CRT), a liquid crystal display, an organic electroluminescence (EL) display, or the like. The input device 607 has keys for inputting characters, numbers, various instructions, and the like, and inputs data. The input device 607 may be a keyboard, a mouse, or the like, or may be a touch-panel input pad, a numeric keypad, or the like.

The sensor device 608 acquires biometric information. The sensor device 608 acquires, for example, information regarding a fingerprint, a vein, a facial expression, a voiceprint, a palm shape, a retina, an iris, or the like as the biometric information. The sensor device 608 acquires, for example, information regarding pulses, heartbeats, or the like, as the biometric information. The sensor device 608 may acquire, for example, information regarding looks, as the biometric information. Specifically, the sensor device 608 includes a vein sensor and acquires information regarding a vein of a user obtained with the vein sensor as the biometric information. For example, the sensor device 608 includes an imaging device and may acquire image information of looks of the user captured by the imaging device as the biometric information.

The authentication-side device 201 may include, for example, a printer, a scanner, a microphone, a speaker, or the like, in addition to the above-described components. Furthermore, the authentication-side device 201 may include the plurality of recording medium I/Fs 604 and the recording media 605. Furthermore, the authentication-side device 201 does not have to include the recording medium I/F 604 or the recording medium 605.

### (Hardware Configuration Example of Virtual-side Device 202)

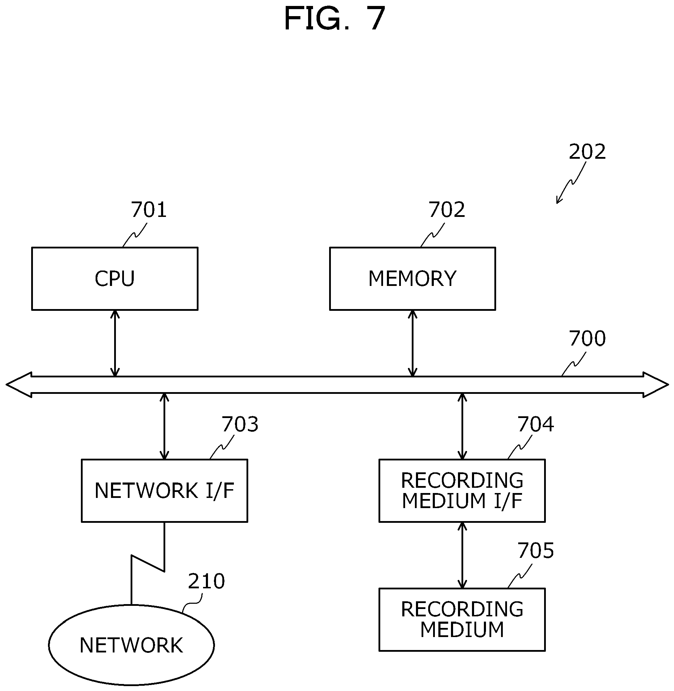

Next, a hardware configuration example of the virtual-side device 202 will be described with reference to FIG. 7.

FIG. 7 is a block diagram illustrating a hardware configuration example of the virtual-side device 202. In FIG. 7, the virtual-side device 202 includes a CPU 701, a memory 702, a network I/F 703, a recording medium I/F 704, and a recording medium 705. Furthermore, the individual components are coupled to each other by a bus 700.

Here, the CPU 701 performs overall control of the virtual-side device 202. The memory 702 includes, for example, a ROM, a RAM, a flash ROM, and the like. Specifically, for example, the flash ROM or the ROM stores various programs, and the RAM is used as a work area for the CPU 701. The programs stored in the memory 702 are loaded into the CPU 701 to cause the CPU 701 to execute coded processing.

The network I/F 703 is coupled to the network 210 through a communication line, and is coupled to another computer via the network 210. Then, the network I/F 703 manages an interface between the network 210 and the inside, and controls input and output of data from another computer. The network I/F 703 is, for example, a modem, a LAN adapter, or the like.

The recording medium I/F 704 controls reading and writing of data from and to the recording medium 705 under the control of the CPU 701. The recording medium I/F 704 is, for example, a disk drive, an SSD, a USB port, or the like. The recording medium 705 is a nonvolatile memory that stores data written under the control of the recording medium I/F 704. The recording medium 705 is, for example, a disk, a semiconductor memory, a USB memory, or the like. The recording medium 705 may be attachable to and detachable from the virtual-side device 202.

The virtual-side device 202 may include, for example, a keyboard, a mouse, a display, a printer, a scanner, a microphone, a speaker, or the like in addition to the above-described components. Furthermore, the virtual-side device 202 may include the plurality of recording medium I/Fs 704 and the plurality of recording media 705. Furthermore, the virtual-side device 202 does not have to include the recording medium I/F 704 and the recording medium 705.

### (Functional Configuration Example of Information Processing System 200)

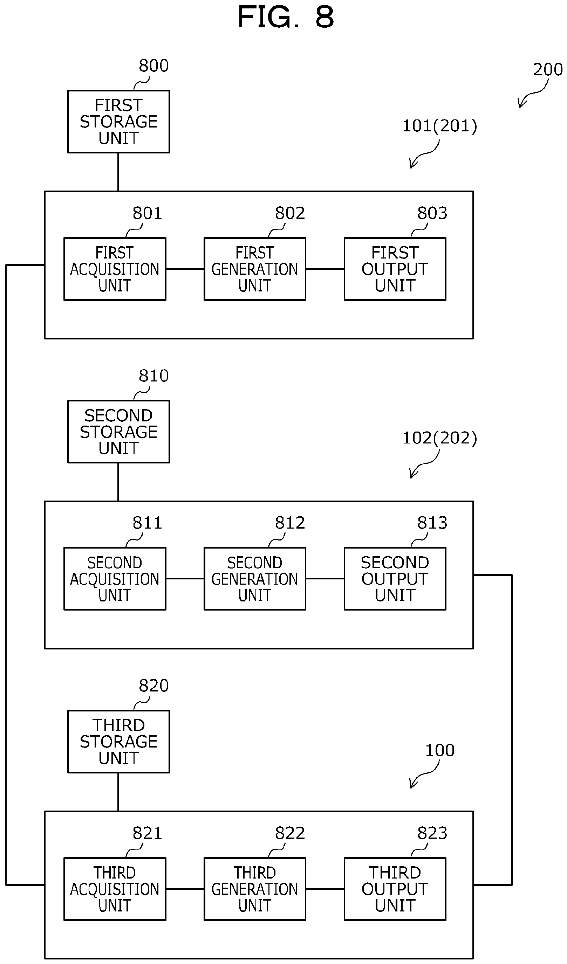

Next, a functional configuration example of the information processing system 200 will be described with reference to FIG. 8.

FIG. 8 is a block diagram illustrating a functional configuration example of the information processing system 200. The information processing system 200 includes the first device 101, the second device 102, and the one or more relay control devices 100.

The first device 101 includes a first storage unit 800, a first acquisition unit 801, a first generation unit 802, and a first output unit 803. The first device 101 is, for example, the authentication-side device 201.

The first storage unit 800 is implemented by a storage area such as the memory 602 or the recording medium 605 illustrated in FIG. 6, for example. Hereinafter, a case will be described where the first storage unit 800 is included in the first device 101. However, the present invention is not limited to this. For example, there may be a case where the first storage unit 800 is included in a device different from the first device 101 and storage content of the first storage unit 800 can be referred from the first device 101.

The first acquisition unit 801 to the first output unit 803 function as an example of a control unit. Specifically, for example, the first acquisition unit 801 to the first output unit 803 implement functions thereof by causing the CPU 601 to execute a program stored in the storage area such as the memory 602 or the recording medium 605 or by the network I/F 603 illustrated in FIG. 6. A processing result of each functional unit is stored in, for example, the storage area such as the memory 602 or the recording medium 605 illustrated in FIG. 6.

The first storage unit 800 stores various types of information referred or updated in processing of each functional unit. The first storage unit 800 stores various types of information used for the authentication processing. The various types of information is, for example, biometric information. The first storage unit 800 stores, for example, authentication software that can provide the authentication function. The authentication software is, for example, software that executes the authentication processing. The authentication software may be, for example, software that acquires an authentication result obtained by executing the authentication processing, from a fourth device that can execute the authentication processing, by transmitting an authentication request to the fourth device that can execute the authentication processing. The authentication request includes attribute information regarding a third device using the virtual environment.

The first acquisition unit 801 acquires various types of information used for processing of each functional unit. The first acquisition unit 801 stores the acquired various types of information in the first storage unit 800 or outputs the acquired various types of information to each functional unit. In addition, the first acquisition unit 801 may output the various types of information stored in the first storage unit 800 to each functional unit. The first acquisition unit 801 acquires various types of information based on, for example, a user's operation input. The first acquisition unit 801 may receive various types of information, for example, from a device different from the first device 101.

The first acquisition unit 801 acquires a response to an advance notification. The advance notification is a notification that enables to confirm whether or not a path from the second device 102 to the first device 101 is normal, by enabling the relay control device 100 to actively communicate with the first device 101. The advance notification includes, for example, the attribute information regarding the first device 101 using the virtual environment. The attribute information regarding the first device 101 is, for example, identification information used to identify the first device 101, an IP address allocated to the first device 101, or the like. The response to the advance notification includes identification information indicating that the response is a response to the advance notification. The response to the advance notification is, for example, a trigger to transmit the waiting notification to the relay control device 100 from the first device 101 and is transmitted to enable determination whether or not a communication state between the first device 101 and the relay control device 100 is normal. For example, in a case where there is the plurality of relay control devices 100, the first acquisition unit 801 receives the response to the advance notification, from at least any one of the plurality of relay control devices 100.

The first acquisition unit 801 acquires a response to a waiting notification, including the authentication request. The waiting notification is a notification indicating that the first device 101 is in a waiting state of waiting for an authentication request. The waiting state corresponds to the standby state described above. The waiting notification includes, for example, the attribute information regarding the first device 101 using the virtual environment. The attribute information regarding the first device 101 is, for example, identification information used to identify the first device 101, an IP address allocated to the first device 101, or the like. The response to the waiting notification further includes identification information indicating that the response is a response to the waiting notification. For example, in a case where there is the plurality of relay control devices 100, the first acquisition unit 801 receives the response to the waiting notification, from any one of the relay control devices 100.

The first acquisition unit 801 may accept a start trigger to start processing of any functional unit. The start trigger is, for example, a predetermined operation input by the user. The start trigger may be, for example, reception of predetermined information from another computer. The start trigger may be, for example, output of predetermined information by any one of the functional units. For example, the first acquisition unit 801 accepts the acquisition of the response to the advance notification, as the start trigger to start the processing of the first generation unit 802. For example, the first acquisition unit 801 accepts the acquisition of the response to the waiting notification, as the start trigger to start processing of the first generation unit 802.

The first generation unit 802 generates the advance notification. There may be a case where the first generation unit 802 does not generate the advance notification. As a result, the first generation unit 802 can confirm whether or not the path from the second device 102 to the first device 101 is normal.

The first generation unit 802 generates the waiting notification. For example, in a case where the first device 101 is in a waiting state of waiting for the authentication request, the first generation unit 802 generates the waiting notification. The first generation unit 802 may generate the waiting notification, in response to the acquisition of the response to the advance notification by the first acquisition unit 801. As a result, the first generation unit 802 can enable the relay control device 100 to transfer the authentication request to the first device 101, by enabling the relay control device 100 to actively communicate with the first device 101.

The first generation unit 802 generates a state notification indicating a state of the first device 101. For example, in a case where the first device 101 stops the waiting state, the first generation unit 802 generates the state notification indicating a state where the waiting state is stopped. As a result, the first generation unit 802 can enable the relay control device 100 to appropriately specify the state of the first device 101.

The first output unit 803 outputs the processing result of at least any one of the functional units of the first device 101. The output format is, for example, display on a display, print output to a printer, transmission to an external device by the network I/F 603, or storage in the storage area such as the memory 602 or the recording medium 605. As a result, the first output unit 803 can notify the user of the processing result of at least any one of the functional units of the first device 101 and improve convenience of the first device 101.

The first output unit 803 transmits the advance notification to each of the plurality of relay control devices 100. As a result, the first output unit 803 can determine whether or not a communication path from the second device 102 to the first device 101 via each relay control device 100 is normal.

For example, the first output unit 803 transmits the waiting notification to the relay control device 100. For example, when the response to the waiting notification transmitted to the relay control device 100 times out, the first output unit 803 may repeat an operation for retransmitting the waiting notification to the relay control device 100 a predetermined number of times. Furthermore, for example, in a case where there is the plurality of relay control devices 100, the first output unit 803 transmits the waiting notification, to the relay control device 100 that has received the response to the advance notification, among the plurality of relay control devices 100. As a result, the first output unit 803 can enable the first acquisition unit 801 to acquire the response to the waiting notification including the authentication request.

The first output unit 803 transmits the authentication result using the authentication function, to the relay control device 100. As a result, the first output unit 803 can enable the second device 102 to use the authentication result.

The first output unit 803 transmits the state notification indicating the state of the first device 101, to the relay control device 100. As a result, the first output unit 803 can enable the relay control device 100 to appropriately specify the state of the first device 101.

The second device 102 includes a second storage unit 810, a second acquisition unit 811, a second generation unit 812, and a second output unit 813. The second device 102 is, for example, the virtual-side device 202.

The second storage unit 810 is implemented by the storage area such as the memory 702 or the recording medium 705 illustrated in FIG. 7, for example. Hereinafter, a case will be described where the second storage unit 810 is included in the second device 102. However, the present invention is not limited to this. For example, there may be a case where the second storage unit 810 is included in a device different from the second device 102 and storage content of the second storage unit 810 can be referred from the second device 102.

The second acquisition unit 811 to the second output unit 813 function as an example of the control unit. Specifically, for example, the second acquisition unit 811 to the second output unit 813 implement functions thereof by causing the CPU 701 to execute a program stored in the storage area such as the memory 702 or the recording medium 705 or by the network I/F 703 illustrated in FIG. 7. A processing result of each functional unit is stored in, for example, the storage area such as the memory 702 or the recording medium 705 illustrated in FIG. 7.

The second storage unit 810 stores various types of information referred or updated in processing of each functional unit.

The second acquisition unit 811 acquires various types of information used for processing of each functional unit. The second acquisition unit 811 stores the acquired various types of information in the second storage unit 810 or outputs the acquired various types of information to each functional unit. In addition, the second acquisition unit 811 may output the various types of information stored in the second storage unit 810 to each functional unit. The second acquisition unit 811 acquires various types of information based on, for example, a user's operation input. The second acquisition unit 811 may receive various types of information, for example, from a device different from the second device 102.

The second acquisition unit 811 acquires a response to a confirmation request. The response to the confirmation request includes, for example, identification information indicating that the response is a response to the confirmation request. For example, the second acquisition unit 811 receives the response to the confirmation request, indicating that a communication state from the relay control device 100 to the first device 101 is normal. For example, when there is the plurality of relay control devices 100, the second acquisition unit 811 receives the response to the confirmation request, indicating that the communication state from at least any one of the plurality of relay control devices 100 to the first device 101 is normal.

The second acquisition unit 811 acquires a response to an authentication request. The response to the authentication request includes, for example, the authentication result obtained by executing the authentication processing. The response to the authentication request further includes, for example, identification information indicating that the response is a response to the authentication request. The second acquisition unit 811 receives the response to the authentication request from the relay control device 100, for example. For example, when there is the plurality of relay control devices 100, the second acquisition unit 811 receives the response to the authentication request from any one of the relay control devices 100.

The second acquisition unit 811 may accept a start trigger to start processing of any functional unit. The start trigger is, for example, a predetermined operation input by the user. The start trigger may be, for example, reception of predetermined information from another computer. The start trigger may be, for example, output of predetermined information by any one of the functional units. For example, the second acquisition unit 811 accepts the acquisition of the response to the confirmation request, as the start trigger to start the processing of the second generation unit 812.

For example, in a case where there is the plurality of relay control devices 100, the second generation unit 812 generates a confirmation request for confirming the communication state from the second device 102 to the first device 101, based on a user's operation input. As a result, the second generation unit 812 can confirm the communication state from the second device 102 to the first device 101 vie each relay control device 100 and can determine which relay control device 100 is preferable to pass through.

The second generation unit 812 generates the authentication request, for example, based on a user's operation input. The authentication request includes attribute information regarding a third device using the virtual environment. For example, the second generation unit 812 may generate the authentication request, in response to the response to the confirmation request. As a result, the second generation unit 812 can generate the authentication request for causing the first device 101 to execute the authentication processing.

The second output unit 813 outputs a processing result of at least any one of the functional units of the second device 102. The output format is, for example, display on a display, print output to a printer, transmission to an external device by the network I/F 703, or storage in the storage area such as the memory 702 or the recording medium 705. As a result, the second output unit 813 can notify the user of the processing result of at least any one of the functional units of the second device 102 and improve convenience of the second device 102.

For example, the second output unit 813 transmits the confirmation request for confirming the communication state to the first device 101, to each of the plurality of relay control devices 100. As a result, the second output unit 813 can confirm the communication state from the second device 102 to the first device 101 via each relay control device 100 and can specify which relay control device 100 is preferable to pass through.

For example, the second output unit 813 transmits the authentication request generated by the second generation unit 812, to the relay control device 100. For example, when there is the plurality of relay control devices 100, the second output unit 813 transmits the authentication request to any one of the plurality of relay control devices 100 that has received the response to the confirmation request. Specifically, the second output unit 813 transmits the authentication request, to the relay control device 100 that has received the response to the confirmation request first, among the plurality of relay control devices 100. As a result, the second output unit 813 can cause the first device 101 to execute the authentication processing.

Furthermore, specifically, the second output unit 813 may transmit the authentication request, to any one of the relay control devices 100 that have received the response to the confirmation request in a certain period of time, among the plurality of relay control devices 100. As a result, the second output unit 813 can distribute the load.

The relay control device 100 includes a third storage unit 820, a third acquisition unit 821, a third generation unit 822, and a third output unit 823.

The third storage unit 820 is implemented by the storage area such as the memory 402 or the recording medium 405 illustrated in FIG. 4, for example. Hereinafter, a case will be described where the third storage unit 820 is included in the relay control device 100. However, the present invention is not limited to this. For example, there may be a case where the third storage unit 820 is included in a device different from the relay control device 100 and storage content of the third storage unit 820 can be referred from the relay control device 100.

The third acquisition unit 821 to the third output unit 823 function as an example of the control unit. Specifically, for example, the third acquisition unit 821 to the third output unit 823 implement functions thereof by causing the CPU 401 to execute a program stored in the storage area such as the memory 402 or the recording medium 405 or by the network I/F 403 illustrated in FIG. 4. A processing result of each functional unit is stored in, for example, the storage area such as the memory 402 or the recording medium 405 illustrated in FIG. 4.

The third storage unit 820 stores various types of information referred or updated in the processing of each functional unit. The third storage unit 820 stores, for example, the state of the first device 101. The state is, for example, a waiting state. The state is, for example, a non-waiting state. The non-waiting state is, for example, a state where the waiting state is temporarily stopped, the waiting state is awoken, or the like. Specifically, the third storage unit 820 stores that the first device 101 is in the waiting state. The waiting state is a waiting state of waiting for the authentication request where the authentication request is received and the authentication processing can be executed. More specifically, the third storage unit 820 stores the state of the first device 101, using the state management table 500.

For example, the third storage unit 820 stores the first device 101 and the second device 102 in association with each other. Specifically, the third storage unit 820 stores the first device 101 and the second device 102 in association with each other, using the state management table 500. More specifically, the third storage unit 820 stores the attribute information regarding the first device 101 and the attribute information regarding the second device 102, using the state management table 500.

For example, the third storage unit 820 stores the state of the relay control device 100 in a specifiable manner. The state of the relay control device 100 is, for example, a state where waiting is performed without transmitting a response to a predetermined request. Specifically, the state of the relay control device 100 is a state where waiting is performed without transmitting the response to the advance notification, to the first device 101. Specifically, the state of the relay control device 100 is a state where waiting is performed without transmitting the response to the confirmation request, to the second device 102. Specifically, the state of the relay control device 100 is a state where waiting is performed without transmitting the response to the waiting notification, to the first device 101. Specifically, the state of the relay control device 100 is a state where waiting is performed without transmitting the response to the authentication request, to the second device 102. Specifically, the third storage unit 820 stores the state of the relay control device 100, using the state management table 500, in a specifiable manner.

The third acquisition unit 821 acquires various types of information used for processing of each functional unit. The third acquisition unit 821 stores the acquired various types of information in the third storage unit 820 or outputs the acquired various types of information to each functional unit. In addition, the third acquisition unit 821 may output the various types of information stored in the third storage unit 820 to each functional unit. The third acquisition unit 821 acquires various types of information based on, for example, a user's operation input. The third acquisition unit 821 may receive various types of information, for example, from a device different from the relay control device 100.

The third acquisition unit 821 acquires an advance notification from the first device 101. The advance notification is a notification to make it possible to confirm whether or not the path from the second device 102 to the first device 101 is normal. The advance notification includes, for example, the attribute information regarding the first device 101 using the virtual environment. The attribute information regarding the first device 101 is, for example, identification information used to identify the first device 101, an IP address allocated to the first device 101, or the like. For example, the third acquisition unit 821 acquires the advance notification, by receiving the advance notification, from the first device 101. For example, there may be a case where the third acquisition unit 821 does not acquire the advance notification.

The third acquisition unit 821 acquires a confirmation request from the second device 102. The confirmation request is a request for confirming whether or not the path from the second device 102 to the first device 101 is normal. The confirmation request includes, for example, attribute information regarding the third device using the virtual environment. The third device uses the virtual environment provided by the second device 102, for example. There may be a case where the third device matches the first device 101, for example. The attribute information regarding the third device is, for example, identification information used to identify the third device, an IP address allocated to the third device, or the like. For example, the third acquisition unit 821 acquires the confirmation request, by receiving the confirmation request, from the second device 102. For example, there may be a case where the third acquisition unit 821 does not acquire the confirmation request.

The third acquisition unit 821 acquires a waiting notification from the first device 101. The waiting notification is a notification indicating that the first device 101 is in a waiting state of waiting for an authentication request. The waiting notification includes, for example, the attribute information regarding the first device 101 using the virtual environment. The attribute information regarding the first device 101 is, for example, identification information used to identify the first device 101, an IP address allocated to the first device 101, or the like. For example, the third acquisition unit 821 acquires the waiting notification, by receiving the waiting notification, from the first device 101. For example, the third acquisition unit 821 receives the waiting notification, from the first device 101, in response to the transmission of the response to the advance notification, to the first device 101.

The third acquisition unit 821 acquires an authentication request from the second device 102. The authentication request is a request for executing the authentication processing using the authentication function. The authentication request includes, for example, the attribute information regarding the third device using the virtual environment. The third device uses the virtual environment provided by the second device 102, for example. There may be a case where the third device matches the first device 101, for example. The attribute information regarding the third device is, for example, identification information used to identify the third device, an IP address allocated to the third device, or the like. For example, the third acquisition unit 821 receives the authentication request, by receiving the authentication request, from the second device 102. For example, the third acquisition unit 821 receives the authentication request, from the second device 102, in response to the transmission of the response to the confirmation request, to the second device 102.

The third acquisition unit 821 acquires a state notification indicating the state of the first device 101, from the first device 101. The state notification indicates, for example, that the first device 101 is in a state where the waiting state is temporarily stopped. The third acquisition unit 821 acquires the state notification indicating the state of the first device 101, by receiving the state notification indicating the state of the first device 101, from the first device 101.

The third acquisition unit 821 may accept a start trigger to start processing of any functional unit. The start trigger is, for example, a predetermined operation input by the user. The start trigger may be, for example, reception of predetermined information from another computer. The start trigger may be, for example, output of predetermined information by any one of the functional units.

Specifically, the third acquisition unit 821 accepts the acquisition of the advance notification, as a start trigger to start processing of the third generation unit 822. Specifically, the third acquisition unit 821 accepts the acquisition of the waiting notification, as the start trigger to start the processing of the third generation unit 822. Specifically, the third acquisition unit 821 accepts the acquisition of the authentication request, as the start trigger to start the processing of the third generation unit 822. Specifically, the third acquisition unit 821 accepts the acquisition of the confirmation request, as the start trigger to start the processing of the third generation unit 822.

Upon acquiring the advance notification by the third acquisition unit 821, the third generation unit 822 transitions to a state where waiting is performed without transmitting the response to the advance notification to the first device 101. As a result, the third generation unit 822 can maintain a state where the relay control device 100 can actively communicate with the first device 101, regardless of a coupling environment between the first device 101 and the relay control device 100. For example, the third generation unit 822 can maintain a state where the communication state between the first device 101 and the relay control device 100 can be confirmed.

Upon acquiring the confirmation request by the third acquisition unit 821, the third generation unit 822 transitions to a state where waiting is performed without transmitting the response to the confirmation request to the second device 102. As a result, the third generation unit 822 can maintain a state where the relay control device 100 can actively communicate with the second device 102, regardless of a coupling environment between the second device 102 and the relay control device 100. For example, the third generation unit 822 can maintain a state where the relay control device 100 can transmit the confirmation result to the second device 102. If the relay control device 100 can constantly and actively communicate with the second device 102, when acquiring the confirmation request by the third acquisition unit 821, the third generation unit 822 does not need to transition to the state where waiting is performed without transmitting the response to the confirmation request.

In a case of a state where the confirmation request is acquired by the third acquisition unit 821 and waiting is performed without transmitting the response to the advance notification, the third generation unit 822 generates a response to the received advance notification. The response to the advance notification may be, for example, a trigger for the first device 101 to transmit the waiting notification to the relay control device 100. In other words, for example, the response to the advance notification serves as a waiting notification transmission request. Furthermore, the response to the advance notification has a role for determining whether or not the communication state between the first device 101 and the relay control device 100 is normal, for example, by transmitting the waiting notification from the first device 101 to the relay control device 100. As a result, the third generation unit 822 can determine whether or not the communication state between the first device 101 and the relay control device 100 is normal.

Upon acquiring the waiting notification by the third acquisition unit 821, the third generation unit 822 transitions to a state where waiting is performed without transmitting the response to the waiting notification to the first device 101. As a result, the third generation unit 822 can maintain a state where the relay control device 100 can actively communicate with the first device 101, regardless of a coupling environment between the first device 101 and the relay control device 100. For example, the third generation unit 822 can maintain a state where the relay control device 100 can transmit the authentication request to the first device 101.

Upon acquiring the authentication request by the third acquisition unit 821, the third generation unit 822 transitions to a state where waiting is performed without transmitting the response to the authentication request to the second device 102. As a result, the third generation unit 822 can maintain a state where the relay control device 100 can actively communicate with the second device 102, regardless of a coupling environment between the second device 102 and the relay control device 100. For example, the third generation unit 822 can maintain a state where the relay control device 100 can transmit the authentication result to the second device 102. If the relay control device 100 can constantly and actively communicate with the second device 102, when the authentication request is acquired by the third acquisition unit 821, the third generation unit 822 does not need to transition to the state where waiting is performed without transmitting the response to the authentication request.

In a case of a state where the authentication request is acquired by the third acquisition unit 821 and waiting is performed without transmitting the response to the waiting notification, the third generation unit 822 generates a response to the received waiting notification, including the received authentication request. As a result, the third generation unit 822 can actively transmit the authentication request from the relay control device 100 to the first device 101, regardless of the coupling environment between the first device 101 and the relay control device 100.

In a case of a state where the authentication result is acquired by the third acquisition unit 821 and waiting is performed without transmitting the response to the authentication request, the third generation unit 822 generates a response to the received authentication request, including the received authentication result. As a result, the third generation unit 822 can actively transmit the authentication result from the relay control device 100 to the second device 102, regardless of the coupling environment between the second device 102 and the relay control device 100.

In a case of a state where the authentication request is acquired by the third acquisition unit 821 and waiting is performed without transmitting the response to the waiting notification, the third generation unit 822 determines whether or not attribute information included in the received waiting notification matches attribute information included in the received authentication request. Then, if the attribute information included in the received waiting notification matches the attribute information included in the received authentication request, the third generation unit 822 generates a response to the received waiting notification, including the received authentication request. As a result, even if there is the plurality of first devices 101, the third generation unit 822 can determine whether the authentication request is included in the response to the waiting notification received from which first device 101.

In a case of a state where the authentication request is acquired by the third acquisition unit 821 and waiting is performed without transmitting the response to the waiting notification, the third generation unit 822 determines whether or not the state of the first device 101 satisfies a predetermined condition, based on the received state notification. The predetermined condition is, for example, that the state of the first device 101 is the waiting state. Then, when determining that the state of the first device 101 satisfies the predetermined condition, the third generation unit 822 generates a response to the received waiting notification, including the received authentication request. As a result, the third generation unit 822 can transmit the response to the waiting notification, including the authentication request, to the first device 101, at an appropriate timing suitable for the state of the first device 101.

On the other hand, when it is determined that the state of the first device 101 does not satisfy the predetermined condition, the third generation unit 822 maintains a state where waiting is performed without transmitting the response to the received waiting notification, including the received authentication request, to the first device 101. Then, after waiting until the state of the first device 101 satisfies the predetermined condition and satisfying the predetermined condition, the third generation unit 822 may generate the response to the received waiting notification, including the received authentication request. As a result, even if the first device 101 is in a state where the waiting state is stopped, the third generation unit 822 can maintain a state where waiting is performed without transmitting the response to the waiting notification. Therefore, the third generation unit 822 can make the first device 101 not to retransmit the waiting notification and can reduce the communication amount.

Furthermore, when determining that the state of the first device 101 does not satisfy the predetermined condition, the third generation unit 822 may cancel the state where waiting is performed without transmitting the response to the received waiting notification, including the received authentication request, to the first device 101. In this case, the third generation unit 822 may discard the authentication request without generating the response to the received waiting notification, including the received authentication request and generate an error notification indicating that the authentication request is discarded. As a result, if the first device 101 stops the waiting state, the third generation unit 822 does not need to transmit the response to the waiting notification.

The third generation unit 822 generates a response to the confirmation request, including a confirmation result of confirming whether or not the communication state with the first device 101 is normal, based on whether or not the third acquisition unit 821 receives the waiting notification according to the response to the advance notification. For example, upon receiving the waiting notification according to the response to the advance notification by the third acquisition unit 821, the third generation unit 822 determines that the communication state with the first device 101 is normal. Then, if the communication state to the first device 101 is normal, the third generation unit 822 generates the response to the confirmation request, indicating that the communication state with the first device 101 is normal. As a result, the third generation unit 822 can determine to which relay control device 100 the second device 102 preferably transmits the authentication request.

The third output unit 823 outputs a processing result of at least any one of the functional units of the third device. The output format is, for example, display on a display, a print output to a printer, transmission to an external device by the network I/F 403, or storage in the storage area such as the memory 402 and the recording medium 405. As a result, the third output unit 823 can notify the user of the processing result of at least any one of the functional units of the third device and improve convenience of the relay control device 100.

The third output unit 823 transmits the response to the advance notification, generated by the third generation unit 822, to the first device 101. As a result, the third output unit 823 can confirm the communication state with the first device 101. Furthermore, the third output unit 823 can give a trigger for the first device 101 to transmit the waiting notification to the first device 101.

The third output unit 823 transmits the response to the confirmation request, including the confirmation result, generated by the third generation unit 822, to the second device 102. As a result, the third output unit 823 can transmit the response to the advance notification, including the confirmation result, to the first device 101, regardless of the coupling environment between the first device 101 and the relay control device 100. Furthermore, the third output unit 823 enables the second device 102 to determine whether or not the communication state with the first device 101 is normal.

The third output unit 823 transmits the response to the waiting notification, including the authentication request, generated by the third generation unit 822, to the first device 101. As a result, the third output unit 823 can transmit the response to the waiting notification, including the authentication request, to the first device 101, regardless of the coupling environment between the first device 101 and the relay control device 100.

The third output unit 823 transmits the response to the authentication request, including the authentication result, generated by the third generation unit 822, to the second device 102. As a result, the third output unit 823 can transmit the response to the authentication request, including the authentication result, to the second device 102, regardless of the coupling environment between the second device 102 and the relay control device 100.

Furthermore, the third output unit 823 may transmit the error notification indicating that the authentication request is discarded, generated by the third generation unit 822, to the second device 102. As a result, the third output unit 823 can suppress an increase in a time when the second device 102 waits for the response to the authentication request.

### (First Operation Example of Information Processing System 200)

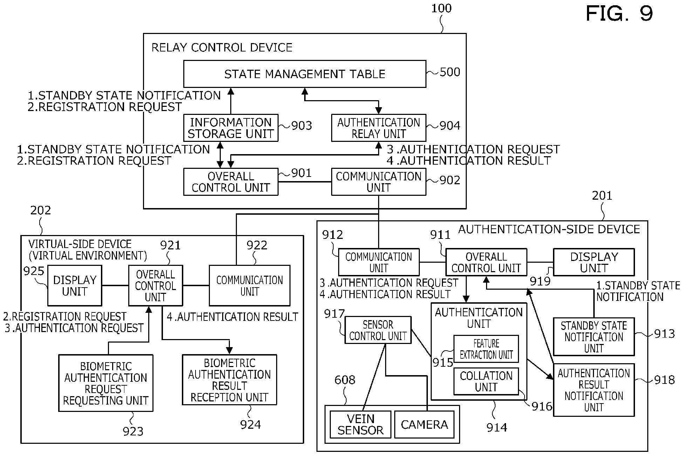

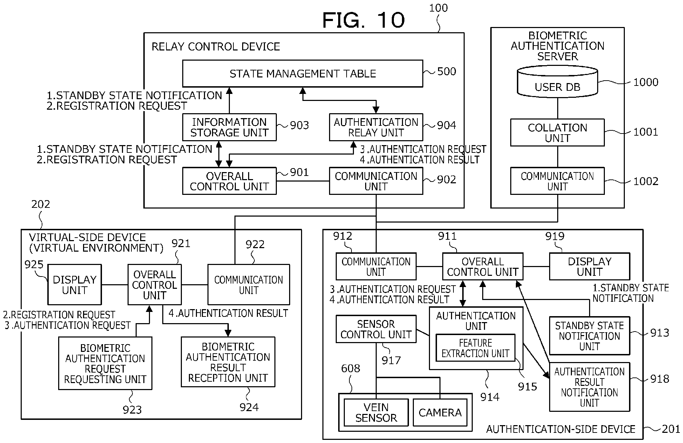

Next, a first operation example of the information processing system 200 will be described with reference to FIGs. 9 to 18. First, for example, a specific example of a functional configuration of the information processing system 200 in the first operation example will be described with reference to FIGs. 9 and 10.

FIGs. 9 and 10 are explanatory diagrams illustrating a specific example of the functional configuration of the information processing system 200 in the first operation example. In FIG. 9, the information processing system 200 includes the relay control device 100, the authentication-side device 201, and the virtual-side device 202. The relay control device 100 includes a state management table 500. The relay control device 100 includes an overall control unit 901, a communication unit 902, an information storage unit 903, and an authentication relay unit 904.

The authentication-side device 201 includes an overall control unit 911, a communication unit 912, a standby state notification unit 913, and an authentication unit 914. The authentication unit 914 includes a feature extraction unit 915 and a collation unit 916. The authentication-side device 201 further includes a sensor control unit 917, an authentication result notification unit 918, and a display unit 919. The virtual-side device 202 includes an overall control unit 921, a communication unit 922, a biometric authentication request requesting unit 923, a biometric authentication result reception unit 924, and a display unit 925.

The overall control unit 901 performs overall control of the relay control device 100. The overall control unit 901 communicates with the authentication-side device 201 and the virtual environment of the virtual-side device 202, using the communication unit 902. The communication unit 902 manages an interface between the relay control device 100 and the authentication-side device 201 or the virtual environment of the virtual-side device 202.

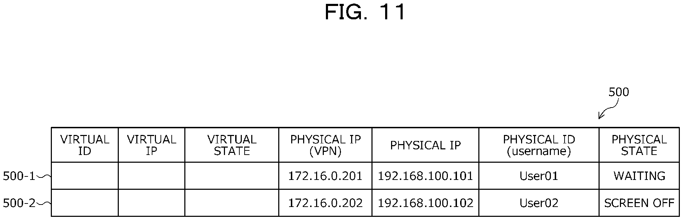

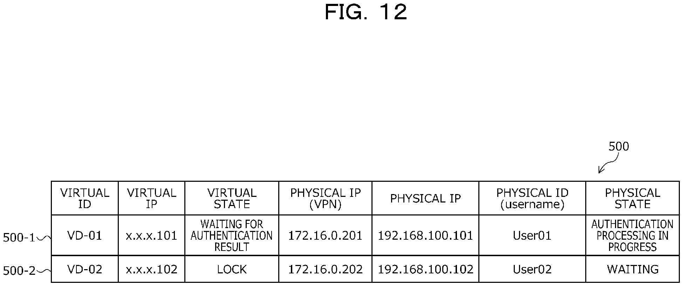

The overall control unit 901 receives a standby state notification including physical terminal information, from the authentication-side device 201, via the communication unit 902. The physical terminal information is attribute information regarding the authentication-side device 201. The overall control unit 901 outputs the standby state notification to the information storage unit 903. The information storage unit 903 stores the physical terminal information included in the standby state notification, in the state management table 500, based on the standby state notification. For example, a change in the storage content of the state management table 500 will be specifically described below with reference to FIGs. 11 and 12.

The overall control unit 901 receives a registration request including the physical terminal information and virtual terminal information, from the virtual environment of the virtual-side device 202, via the communication unit 902. The physical terminal information is attribute information regarding the authentication-side device 201 using the virtual environment of the virtual-side device 202. The virtual terminal information is attribute information regarding the virtual environment of the virtual-side device 202. The overall control unit 901 outputs the registration request to the information storage unit 903. The information storage unit 903 searches for a record of the state management table 500, using the physical terminal information included in the registration request as a key.

The information storage unit 903 associates the authentication-side device 201 with the virtual environment of the virtual-side device 202, by setting the virtual terminal information included in the registration request, to the searched record. For example, a change in the storage content of the state management table 500 will be specifically described below with reference to FIGs. 11 and 12. The information storage unit 903 outputs a number of the specified record to the overall control unit 901. The overall control unit 901 transmits the number of the record to the virtual environment of the virtual-side device 202, via the communication unit 902.

The overall control unit 901 receives an authentication request including the number of the record, from the virtual environment of the virtual-side device 202, via the communication unit 902. The overall control unit 901 outputs the authentication request to the authentication relay unit 904. The authentication relay unit 904 searches for a record of the state management table 500, using the number of the record included in the authentication request as a key. The authentication relay unit 904 acquires physical terminal information set to the searched record. The authentication relay unit 904 outputs the acquired physical terminal information to the overall control unit 901. The overall control unit 901 specifies the authentication-side device 201 to be a destination, based on the physical terminal information. The overall control unit 901 transmits a response to the standby state notification including the received authentication request, to the specified authentication-side device 201, via the communication unit 902.

The overall control unit 901 receives an authentication result obtained by executing the authentication processing, including the physical terminal information, from the authentication-side device 201, via the communication unit 902. The overall control unit 901 outputs the authentication result to the authentication relay unit 904. The authentication relay unit 904 searches for a record of the state management table 500, using the physical terminal information included in the authentication result as a key. The authentication relay unit 904 acquires virtual terminal information set to the searched record. The authentication relay unit 904 outputs the acquired virtual terminal information to the overall control unit 901. The overall control unit 901 specifies a virtual environment of the virtual-side device 202 to be a destination, based on the virtual terminal information. The overall control unit 901 transmits a response to the authentication request, including the received authentication result, to the specified virtual environment of the virtual-side device 202, via the communication unit 902.

The overall control unit 911 performs overall control of the authentication-side device 201. The overall control unit 911 communicates with the relay control device 100, using the communication unit 912. The communication unit 912 manages an interface between the relay control device 100 and the authentication-side device 201.

The standby state notification unit 913 detects that the authentication-side device 201 is in the standby state. The standby state notification unit 913 detects that the authentication-side device 201 is in the standby state, for example, based on a user's operation input. The standby state notification unit 913 outputs to the overall control unit 911 that it is detected that the authentication-side device 201 is in the standby state. Upon receiving that the authentication-side device 201 is in the standby state, the overall control unit 911 transmits the standby state notification including the physical terminal information, to the relay control device 100, via the communication unit 912.

The overall control unit 911 receives the authentication request from the relay control device 100, via the communication unit 912. The overall control unit 911 outputs the received authentication request to the authentication unit 914. Upon receiving the authentication request, the authentication unit 914 acquires the biometric information obtained by the sensor device 608, using the sensor control unit 917. The authentication unit 914 extracts a feature included in the acquired biometric information, using the feature extraction unit 915 and outputs the feature to the collation unit 916. The collation unit 916 executes the authentication processing, based on the feature included in the biometric information. The authentication unit 914 outputs an authentication result obtained by executing the authentication processing by the collation unit 916, to the authentication result notification unit 918. The authentication result notification unit 918 transmits the authentication result obtained by executing the authentication processing, including the physical terminal information, to the overall control unit 911. The overall control unit 911 transmits the authentication result obtained by executing the authentication processing, including the physical terminal information, to the relay control device 100, via the communication unit 912. For example, the display unit 919 displays the authentication result.

The overall control unit 921 performs overall control of the virtual environment of the virtual-side device 202. The overall control unit 921 communicates with the relay control device 100, using the communication unit 922. The communication unit 922 manages an interface between the relay control device 100 and the virtual environment of the virtual-side device 202.

The overall control unit 921 transmits a registration request including the physical terminal information and the virtual terminal information, to the relay control device 100, via the communication unit 922. The biometric authentication request requesting unit 923 outputs a trigger to transmit the authentication request, to the overall control unit 921, based on a user's operation input. The overall control unit 921 transmits the authentication request including the physical terminal information, to the relay control device 100, via the communication unit 922. The overall control unit 921 receives the authentication result, via the communication unit 922. The overall control unit 921 outputs the authentication result, to the biometric authentication result reception unit 924. The biometric authentication result reception unit 924 executes login processing, based on the authentication result. For example, the display unit 925 displays the authentication result. For example, the display unit 925 displays an execution result obtained by executing the login processing.

Here, a case has been described where the registration request and the authentication request are different pieces of information. However, the present invention is not limited to this. For example, there may be a case where the authentication request includes the registration request. Furthermore, here, a case has been described where the authentication-side device 201 includes the collation unit 916 and executes the authentication processing. However, the present invention is not limited to this. For example, there may be a case where the authentication-side device 201 does not include the collation unit 916. Next, proceeding to the description of FIG. 10, and a specific example of the functional configuration of the information processing system 200 in a case where the authentication-side device 201 does not include the collation unit 916 will be described.

In FIG. 10, a component same as that in FIG. 9 is denoted with the same reference numeral as in FIG. 9, and description thereof is omitted. The information processing system 200 further includes a biometric authentication server. The biometric authentication server includes a user database (DB) 1000, a collation unit 1001, and a communication unit 1002. The user DB 1000 stores, for example, a correct answer of a feature appearing in biometric information of a valid user.

The authentication unit 914 extracts the feature of the acquired biometric information, using the feature extraction unit 915 and outputs the feature to the overall control unit 911. The overall control unit 911 transmits the feature included in the biometric information, to the biometric authentication server, via the communication unit 912.

The collation unit 1001 receives the feature included in the biometric information, via the communication unit 1002. The collation unit 1001 executes the authentication processing, based on the feature included in the biometric information. For example, the collation unit 1001 executes the authentication processing, by collating the feature included in the biometric information with the correct answer of the user DB 1000. The collation unit 1001 transmits an authentication result obtained by executing the authentication processing to the authentication-side device 201, via the communication unit 1002. The overall control unit 911 outputs the received authentication result to the authentication result notification unit 918.

Next, an example of the change in the storage content of the state management table 500 will be described with reference to FIGs. 11 and 12.

FIGs. 11 and 12 are explanatory diagrams illustrating an example of the change in the storage content of the state management table 500. As illustrated in FIG. 11, the relay control device 100 updates the state management table 500 in response to the reception of the standby state notification including the physical terminal information, from the authentication-side device 201. The relay control device 100 updates the state management table 500, for example, based on the physical terminal information included in the standby state notification. The physical terminal information includes, for example, a physical IP (VPN) that is an IP address allocated to the authentication-side device 201 by the VPN, a physical IP that is an IP address allocated to the authentication-side device 201, a physical ID used to identify the authentication-side device 201, or the like.

Specifically, the relay control device 100 may store a record 500-1 to which the physical IP (VPN), the physical IP, the physical ID, or the like included in the physical terminal information included in the standby state notification is set, in the state management table 500, according to the standby state notification. At this time, specifically, the relay control device 100 may register information "waiting" indicating that the authentication-side device 201 is in the standby state, in the record 500-1.

Furthermore, the relay control device 100 may update the state management table 500, in response to the reception of the state notification indicating the state of the authentication-side device 201, from the authentication-side device 201. The relay control device 100 updates the state management table 500, for example, based on the state notification indicating the state of the authentication-side device 201.

Specifically, if information "waiting" is set to a record 500-2 and a state notification indicating information "screen OFF" of the authentication-side device 201 is received from the authentication-side device 201 corresponding to the record 500-2, the relay control device 100 may update the record 500-2. The state "screen OFF" corresponds to a state where the standby state is temporarily stopped. More specifically, the relay control device 100 updates the information "waiting" of the record 500-2 to the information "screen OFF". As a result, the state management table 500 can manage the state of the authentication-side device 201 and determine whether or not the authentication-side device 201 is in a state where the authentication request can be transmitted. Next, description proceeds to FIG. 12.

As illustrated in FIG. 12, the relay control device 100 updates the state management table 500, in response to reception of the registration notification or the authentication request including the physical terminal information and the virtual terminal information, from the virtual-side device 202. The relay control device 100 updates the state management table 500, for example, based on the physical terminal information and the virtual terminal information included in the registration request or the authentication request. The physical terminal information includes, for example, at least any one of the physical IP (VPN), the physical IP, the physical ID, or the like. The virtual terminal information includes, for example, a virtual ID used to identify the virtual environment, a virtual IP that is an IP address allocated to the virtual environment, or the like.

Specifically, the relay control device 100 searches for a record of the state management table 500, using the physical IP (VPN), the physical IP, the physical ID, or the like included in the physical terminal information included in the registration request or the authentication request, as a key, in response to the registration request or the authentication request. Here, it is assumed that the record 500-1 be searched. Specifically, the relay control device 100 registers the virtual ID, the virtual IP, or the like included in the virtual terminal information included in the registration notification or the authentication request, in the searched record 500-1. In a case where the relay control device 100 transmits the response to the standby state notification including the authentication request, to the authentication-side device 201, the relay control device 100 updates the information "waiting" in the record 500-1 to information "authentication processing in progress". As a result, the state management table 500 can associate the authentication-side device 201 with the virtual environment of the virtual-side device 202 and enables the relay control device 100 to appropriately transfer the authentication request.

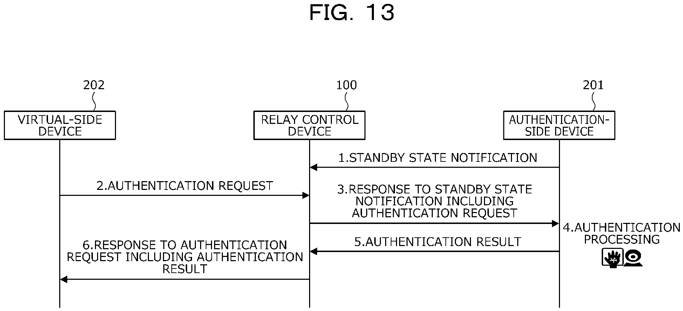

Next, a flow of the first operation example of the information processing system 200 will be described with reference to FIG. 13.

FIG. 13 is an explanatory diagram illustrating the flow of the first operation example of the information processing system 200. (13: 1) The authentication-side device 201 acquires the physical terminal information. The authentication-side device 201 generates the standby state notification including the acquired physical terminal information and transmits the standby state notification, to the relay control device 100. Upon receiving the standby state notification, the relay control device 100 registers a record in which the physical terminal information included in the standby state notification is associated with the state "waiting", in the state management table 500. The relay control device 100 does not transmit the response to the standby state notification.

(13:2) When attempting to use the authentication result, the virtual environment acquires the physical terminal information regarding the authentication-side device 201 using the virtual environment. Furthermore, the virtual environment acquires the virtual terminal information. The virtual environment generates an authentication request including the acquired physical terminal information and the acquired virtual terminal information and transmits the authentication request, to the relay control device 100. Upon receiving the authentication request, the relay control device 100 searches for a record of the state management table 500, using the physical terminal information included in the authentication request as a key. The relay control device 100 registers the virtual terminal information included in the authentication request, in the searched record. The relay control device 100 does not transmit the response to the authentication request.

As a result, the relay control device 100 can associate the physical terminal information with the virtual terminal information and can associate the authentication-side device 201 with the virtual environment of the virtual-side device 202. Therefore, the relay control device 100 can specify which authentication-side device 201 and which virtual environment of which virtual-side device 202 should exchange the authentication request and the authentication result for the authentication request.

(13:3) The relay control device 100 generates the response to the standby state notification, including the authentication request, and transmits the response to the authentication-side device 201. (13:4) The authentication-side device 201 receives the response to the standby state notification and extracts the authentication request included in the response to the standby state notification. The authentication-side device 201 executes the authentication processing, based on the extracted authentication request. The authentication-side device 201 acquires the physical terminal information. The authentication-side device 201 transmits the authentication result obtained by executing the authentication processing, including the acquired physical terminal information, to the relay control device 100.

(13:5) The relay control device 100 receives the authentication result. (13:6) The relay control device 100 searches for a record of the state management table 500, using the physical terminal information included in the received authentication result as a key. The relay control device 100 specifies the virtual environment to be a destination, based on the virtual terminal information set to the searched record. The relay control device 100 generates the response to the authentication request, including the received authentication result, to the specified virtual environment. As a result, the relay control device 100 can transmit the authentication request from the virtual environment to the authentication-side device 201.

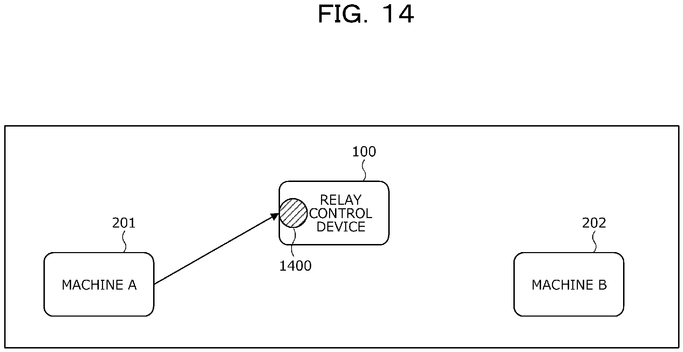

Next, a specific example of the first operation example of the information processing system 200 will be described with reference to FIGs. 14 to 18.

FIGs. 14 to 18 are explanatory diagrams illustrating a specific example of the first operation example of the information processing system 200. In FIGs. 14 to 18, the information processing system 200 includes a machine A to be the authentication-side device 201, the relay control device 100, and a machine B to be the virtual-side device 202. The machine B includes a virtual environment. It is assumed that a user use the virtual environment of the machine B, with the machine A.

In FIG. 14, the machine A transitions to, for example, the standby state, based on a user's operation input. Furthermore, the machine A acquires physical terminal information of the machine A, generates a standby state notification including the acquired physical terminal information, and transmits the standby state notification to the relay control device 100.

The relay control device 100 receives the standby state notification. The relay control device 100 registers the physical terminal information included in the received standby state notification and the state "waiting", in the state management table 500. The relay control device 100 transitions to a state where waiting is performed without transmitting a response 1400 to the received standby state notification to the machine A.

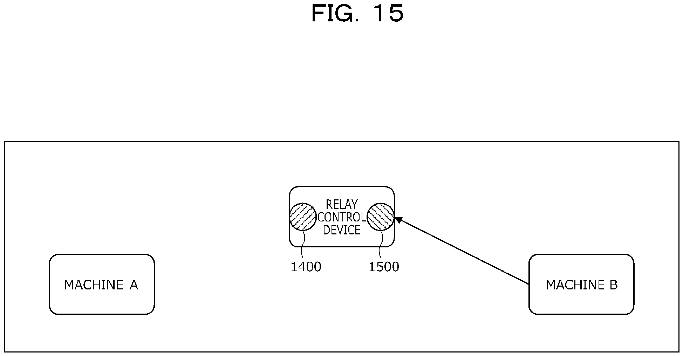

The response 1400 includes, for example, information indicating correspondence to the standby state notification. Specifically, the response 1400 includes a session ID same as the standby state notification, and it is preferable to grasp that the response 1400 corresponds to the standby state notification, in the relay control device 100 and on a communication path from the relay control device 100 to the machine A. In other words, the response 1400 can be transmitted through the communication path of the standby state notification, in an opposite direction to the standby state notification. As a result, the relay control device 100 can maintain a state where the relay control device 100 can actively communicate with the machine A, using the response 1400. Next, description proceeds to FIG. 15.

In FIG. 15, the virtual environment of the machine B acquires virtual terminal information and the physical terminal information of the machine A using the virtual environment, based on a user's operation input, generates an authentication request including the acquired virtual terminal information and physical terminal information, and transmits the authentication request to the relay control device 100. The relay control device 100 receives the authentication request. Upon receiving the authentication request, the relay control device 100 transitions to a state where waiting is performed without transmitting a response 1500 to the authentication request, to the virtual environment of the machine B.

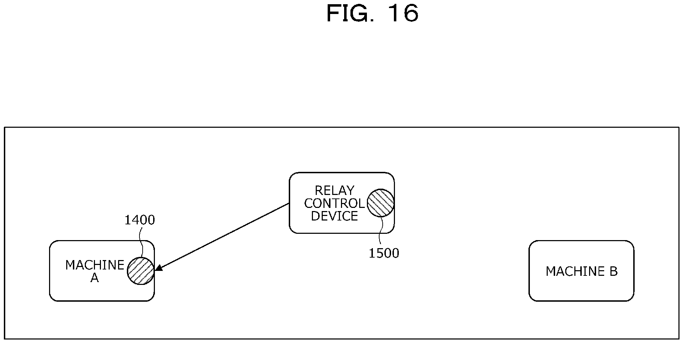

The response 1500 includes, for example, information indicating correspondence to the authentication request. Specifically, the response 1500 includes a session ID same as the authentication request, and it is preferable to grasp that the response 1500 corresponds to the authentication request, in the relay control device 100 or on a communication path from the relay control device 100 to the virtual environment of the machine B. In other words, the response 1500 can be transmitted through the communication path of the authentication request, in an opposite direction to the authentication request. As a result, the relay control device 100 can maintain a state where the relay control device 100 can actively communicate with the virtual environment of the machine B, using the response 1500. Next, description proceeds to FIG. 16.

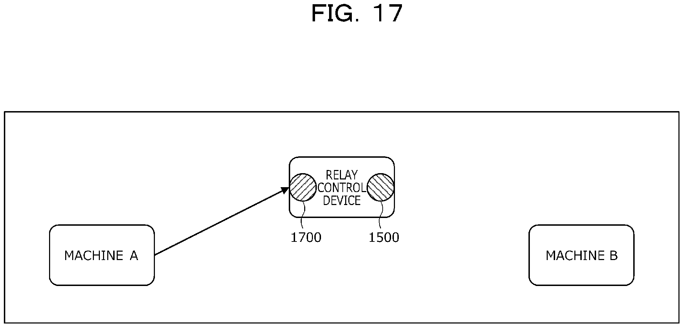

In FIG. 16, the relay control device 100 searches for a record of the state management table 500, using the physical terminal information included in the received authentication request as a key and specifies the machine A to be a destination. The relay control device 100 registers the virtual terminal information included in the received authentication request, in the searched record. The relay control device 100 transmits the response 1400 to the standby state notification, including the received authentication request, to the specified machine A, if the state "waiting" is set to the searched record. As a result, the relay control device 100 can enable the machine A to acquire the authentication request, regardless of a coupling environment with the machine A. Next, description proceeds to FIG. 17.

In FIG. 17, the machine A receives the response 1400 to the standby state notification. The machine A extracts an authentication request included in the response 1400 to the standby state notification, and executes the authentication processing according to the extracted authentication request. The machine A acquires the physical terminal information of the machine A. The machine A transmits the authentication result obtained by executing the authentication processing, including the acquired physical terminal information, to the relay control device 100. The relay control device 100 receives the authentication result. The relay control device 100 transitions to a state where waiting is performed without transmitting a response 1700 to the received authentication result, to the machine A.

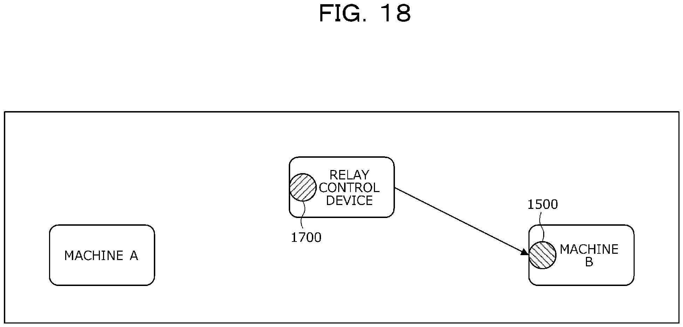

The response 1700 includes, for example, information indicating correspondence to the authentication result. Specifically, the response 1700 includes a session ID same as the authentication result, and it is preferable to grasp that the response 1700 corresponds to the authentication result, in the relay control device 100 or on the communication path form the relay control device 100 to the machine A. In other words, the response 1700 can be transmitted through the communication path of the authentication result, in an opposite direction to the authentication result. As a result, the relay control device 100 can maintain a state where the relay control device 100 can actively communicate with the machine A, using the response 1700. Next, description proceeds to FIG. 18.

In FIG. 18, the relay control device 100 searches for a record of the state management table 500, using the physical terminal information included in the authentication result as a key. The relay control device 100 specifies the virtual environment of the machine B to be a destination, based on the virtual terminal information set to the searched record. The relay control device 100 transmits the response 1500 to the authentication request, including the authentication result, to the specified virtual environment of the machine B. As a result, the relay control device 100 can enable the virtual environment of the machine B to appropriately acquire the authentication result, in response to the authentication request.

In this way, the relay control device 100 can maintain a state where the relay control device 100 can actively communicate with the machine A, even if the machine A is a device having a private IP address. The relay control device 100 can associate the machine A with the virtual environment of the machine B, using the state management table 500. Therefore, the relay control device 100 can appropriately relay between the machine A and the virtual environment of the machine B.

### (Overall Processing Procedure of First Operation Example)

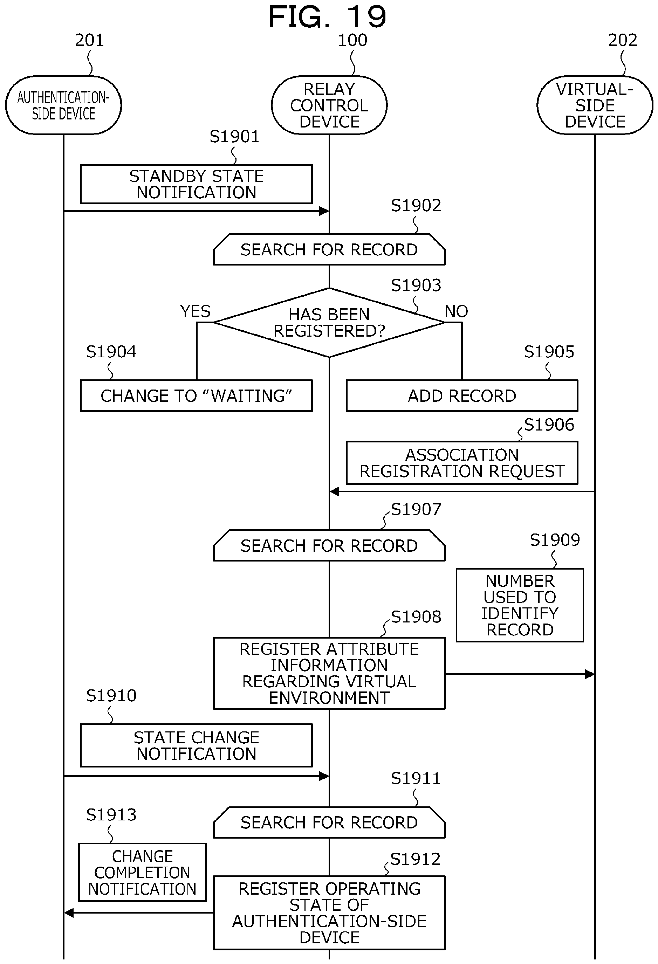

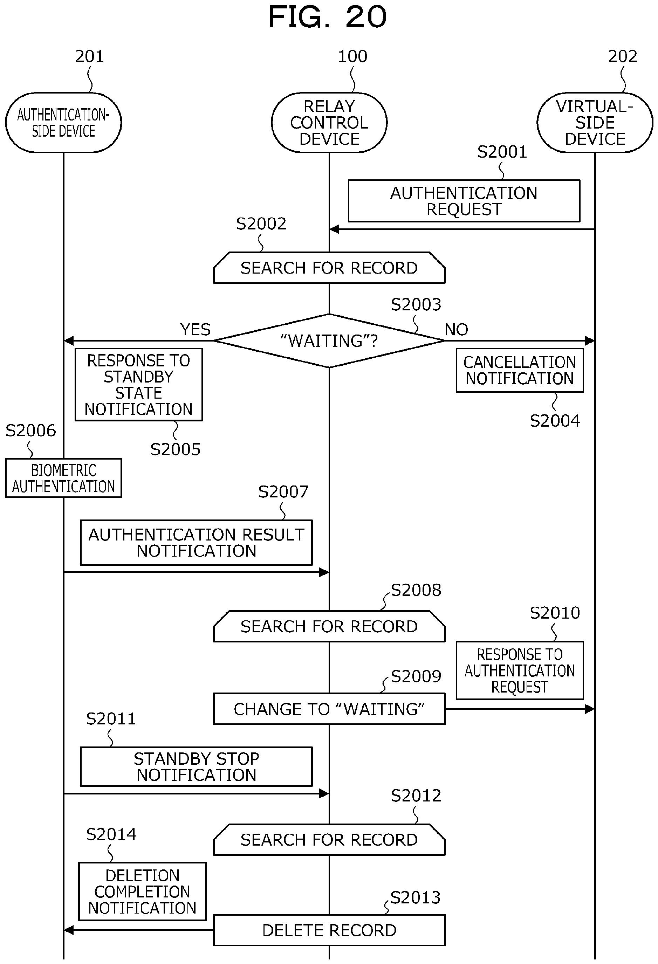

Next, an example of an overall processing procedure of the first operation example, executed by the information processing system 200, will be described with reference to FIGs. 19 and 20.

FIGs. 19 and 20 are sequence diagrams illustrating an example of the overall processing procedure of the first operation example. In FIG. 19, the authentication-side device 201 transmits the standby state notification including the attribute information regarding the authentication-side device 201, to the relay control device 100, based on a user's operation input (step S1901).

Next, upon receiving the standby state notification, the relay control device 100 searches for a record in which the attribute information regarding the authentication-side device 201 is registered, from the state management table 500, without transmitting the response to the standby state notification (step S1902). Then, the relay control device 100 determines whether or not the attribute information regarding the authentication-side device 201 has been registered in the record of the state management table 500, as a result of the search (step S1903).

Here, in a case where the attribute information has been registered (step S1903; Yes), the relay control device 100 proceeds to processing in step S1904. On the other hand, in a case where the attribute information has not been registered (step S1903: No), the relay control device 100 proceeds to processing in step S1905.

In step S1904, the relay control device 100 changes the state of the authentication-side device 201 registered in the searched record to "waiting" (step S1904). Then, the relay control device 100 proceeds to processing in step S1907.

In step S1905, the relay control device 100 adds a record registered in association with the attribute information regarding the authentication-side device 201 and the state "waiting" of the authentication-side device 201, to the state management table 500 (step S1905). Then, the relay control device 100 proceeds to processing in step S1907.

Furthermore, the virtual-side device 202 transmits an association registration request including the attribute information regarding the virtual environment and the attribute information regarding the authentication-side device 201 using the virtual environment, to the relay control device 100, based on a user's operation input (step S1906). The relay control device 100 receives the registration request.

Next, the relay control device 100 searches for a record in which the attribute information regarding the authentication-side device 201 included in registration information is registered, from the state management table 500 (step S1907). Then, the relay control device 100 registers the attribute information regarding the virtual environment, in association with the attribute information regarding the authentication-side device 201, in the searched record (step S1908). Thereafter, the relay control device 100 transmits a number used to identify the searched record to the virtual-side device 202 (step S1909).

Furthermore, in a case where an operating state of the own device changes, the authentication-side device 201 transmits a state change notification including the attribute information regarding the authentication-side device 201 and the operating state of the authentication-side device 201, to the relay control device 100 (step S1910). The relay control device 100 receives the state change notification.

Next, upon receiving the state change notification, the relay control device 100 searches for a record in which the attribute information regarding the authentication-side device 201 is registered (step S1911). Then, the relay control device 100 registers the operating state of the authentication-side device 201 in association with the attribute information regarding the authentication-side device 201, in the searched record (step S1912). Next, the relay control device 100 transmits a change completion notification, to the authentication-side device 201 (step S1913). Next, description proceeds to FIG. 20.

In FIG. 20, the virtual-side device 202 transmits the authentication request including the attribute information regarding the authentication-side device 201 using the virtual environment and the number of the record, to the relay control device 100 (step S2001). The relay control device 100 receives the authentication request.

Next, upon receiving the authentication request, the relay control device 100 searches for a record in which the attribute information regarding the authentication-side device 201 is registered, from the state management table 500, without transmitting the response to the authentication request (step S2002). Then, the relay control device 100 determines whether or not the state of the authentication-side device 201 registered in the searched record is "waiting" (step S2003).

Here, in a case where the state of the authentication-side device 201 is "waiting" (step S2003: Yes), the relay control device 100 proceeds to processing in step S2005. On the other hand, in a case where the state of the authentication-side device 201 is not "waiting" (step S2003: No), the relay control device 100 proceeds to processing in step S2004.

In step S2004, the relay control device 100 transmits a cancellation notification to the virtual-side device 202 (step S2004). Then, the information processing system 200 ends the overall processing.

In step S2005, the relay control device 100 transmits the response to the standby state notification, including the received authentication request, to the authentication-side device 201 and changes the state of the authentication-side device 201 registered in the searched record, to "authentication request in progress" (step S2005).

Upon receiving the response to the standby state notification including the authentication request, the authentication-side device 201 executes biometric authentication (step S2006). Next, the authentication-side device 201 transmits an authentication result notification including the attribute information regarding the authentication-side device 201, to the relay control device 100 (step S2007). The relay control device 100 receives the authentication result notification.

Next, upon receiving the authentication result notification, the relay control device 100 searches for a record in which the attribute information regarding the authentication-side device 201 is registered, from the state management table 500 (step S2008). Then, the relay control device 100 changes the state of the authentication-side device 201 registered in the searched record, to "waiting" (step S2009). Thereafter, the relay control device 100 transmits the response to the authentication request, including the received authentication result notification, to the virtual-side device 202 (step S2010).

In a case where the own device does not execute the biometric authentication thereafter, the authentication-side device 201 transmits a standby stop notification including the attribute information regarding the authentication-side device 201, to the relay control device 100 (step S2011). The relay control device 100 receives the standby stop notification.

Upon receiving the standby stop notification, the relay control device 100 searches for a record in which the attribute information regarding the authentication-side device 201 is registered, from the state management table 500 (step S2012). Next, the relay control device 100 deletes the searched record, from the state management table 500 (step S2013). Then, the relay control device 100 transmits a deletion completion notification, to the authentication-side device 201 (step S2014). Thereafter, the information processing system 200 ends the overall processing.

### (Second Operation Example of Information Processing System 200)

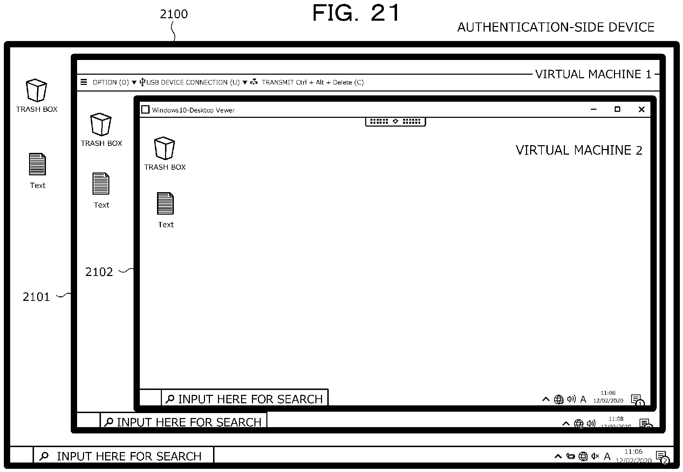

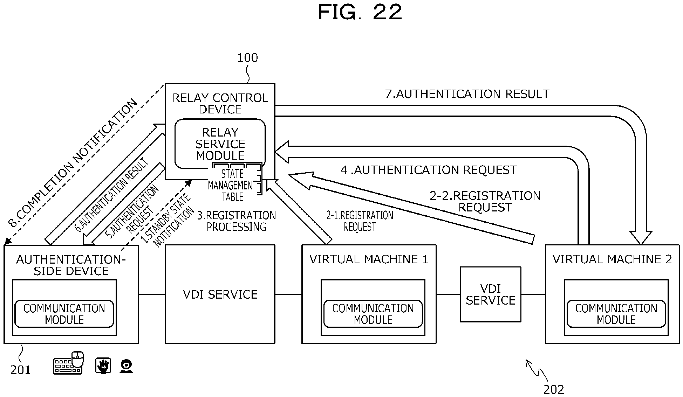

Next, a second operation example of the information processing system 200 will be described with reference to FIGs. 21 and 22. The first operation example described above is an operation example in a case where the number of virtual environments included in the virtual-side device 202 is one, and the virtual environment is not layered. On the other hand, the second operation example is an operation example corresponding to a case where there is the plurality of virtual environments included in the virtual-side device 202 and the virtual environments are layered. First, a case where there is the plurality of virtual environments will be described with reference to FIGs. 21 and 22.

FIGs. 21 and 22 are explanatory diagrams illustrating an example of a case where there is the plurality of virtual environments. As illustrated in FIG. 21, the authentication-side device 201 accesses the virtual-side device 202, based on a user's operation input, and uses the plurality of layered virtual environments included in the virtual-side device 202.

Specifically, the authentication-side device 201 activates a virtual machine 1, on a desktop screen 2100 of the authentication-side device 201. Specifically, the authentication-side device 201 displays a desktop screen 2101 of the virtual machine 1, in the desktop screen 2100 of the authentication-side device 201. Specifically, moreover, the authentication-side device 201 activates a virtual machine 2, on the desktop screen 2101 of the virtual machine 1, and displays a desktop screen 2102 of the virtual machine 2 in the desktop screen 2101 of the virtual machine 1. Next, description proceeds to FIG. 22, and an example of the information processing system 200 in a case where there is the plurality of virtual environments will be described.

As illustrated in FIG. 22, the information processing system 200 includes the relay control device 100, the authentication-side device 201, and the virtual-side device 202. The virtual-side device 202 includes the virtual machine 1 and the virtual machine 2. The authentication-side device 201 and the virtual machine 1 are relayed with a VDI service. The VDI service activates the virtual machine 1, on the desktop screen 2100 of the authentication-side device 201. The virtual machine 1 and the virtual machine 2 are relayed with the VDI service. The VDI service activates the virtual machine 2, on the desktop screen 2101 of the virtual machine 1.

In FIG. 22, (22:1) the authentication-side device 201 transmits the standby state notification including the physical terminal information of the authentication-side device 201, to the relay control device 100, using a communication module. Upon receiving the standby state notification, the relay control device 100 stores the physical terminal information, in the state management table 500.

(22:2-1) The virtual machine 1 acquires the physical terminal information of the authentication-side device 201, from a registry of the virtual machine 1, as previous hop terminal information. The virtual machine 1 transmits a registration request including the acquired previous hop terminal information and virtual terminal information of the virtual machine 1, to the relay control device 100.

(22:2-2) The virtual machine 2 acquires the virtual terminal information of the virtual machine 1 existing in a previous hop, from the registry of the virtual machine 2, as the previous hop terminal information. The virtual machine 2 transmits a registration request including the acquired previous hop terminal information and virtual terminal information of the virtual machine 2, to the relay control device 100.

Here, a case has been described where the virtual terminal information of the virtual machine 1 existing in the previous hop exists in the registry of the virtual machine 2. However, the present invention is not limited to this. For example, there may be a case where the physical terminal information of the authentication-side device 201 exists in the registry of the virtual machine 2. Specifically, a case is considered where the physical terminal information of the authentication-side device 201 exists in the registry of the virtual machine 2, depending on a VDI format. In this case, the virtual machine 2 acquires the physical terminal information of the authentication-side device 201, from the registry of the virtual machine 2. The virtual machine 2 transmits a registration request including the acquired physical terminal information of the authentication-side device 201 and the virtual terminal information of the virtual machine 2, to the relay control device 100.

(22:3) When receiving the registration request, if the physical terminal information is included in the registration request as the previous hop terminal information, the relay control device 100 searches for a record of the state management table 500, using the physical terminal information included in the registration request as a key. For example, when the relay control device 100 receives the registration request from the virtual machine 1, the physical terminal information is included in the registration request as the previous hop terminal information. The relay control device 100 sets the virtual terminal information included in the registration request, to the searched record.

Furthermore, when receiving the registration request, if the virtual terminal information is included in the registration request as the previous hop terminal information, the relay control device 100 searches for a record of the state management table 500, using the previous hop terminal information as a key. For example, when the relay control device 100 receives the registration request from the virtual machine 2, the virtual terminal information is included in the registration request as the previous hop terminal information. The relay control device 100 extracts the physical terminal information from the searched record. The relay control device 100 adds a record in which the extracted physical terminal information is associated with the virtual terminal information included in the registration request as the previous hop terminal information, to the state management table 500.

When receiving the registration request, if the physical terminal information is included in the registration request, the relay control device 100 searches for a record of the state management table 500, using the physical terminal information included in the registration request as a key. For example, when the relay control device 100 receives the registration request from the virtual machine 2, there is a case where the physical terminal information is included in the registration request. The relay control device 100 sets the virtual terminal information included in the registration request, to the searched record.

(22:4) The virtual machine 2 acquires the virtual terminal information of the virtual machine 1 existing in a previous hop, from the registry of the virtual machine 2, as the previous hop terminal information. The virtual machine 2 transmits an authentication request including the acquired previous hop terminal information and virtual terminal information of the virtual machine 2, to the relay control device 100.

Furthermore, in a case where the virtual machine 1 transmits the authentication request to the relay control device 100, the virtual machine 1 acquires the physical terminal information of the authentication-side device 201, as the previous hop terminal information. Then, the virtual machine 1 transmits an authentication request including the acquired previous hop terminal information and virtual terminal information of the virtual machine 2, to the relay control device 100. In the example in FIG. 22, it is assumed that the virtual machine 2 transmit the authentication request to the relay control device 100.

(22:5) Upon receiving the authentication request, the relay control device 100 searches for a record of the state management table 500, using the previous hop terminal information included in the authentication request as a key. In the example in FIG. 22, the relay control device 100 sets the virtual terminal information included in the authentication request, to the searched record. As a result, even if it is difficult for the virtual machine 2 to directly acquire the physical terminal information of the authentication-side device 201, the relay control device 100 can associate the authentication-side device 201 with the virtual machine 2. The relay control device 100 transmits the response to the standby state notification, including the authentication request, to the authentication-side device 201.

(22:6) The authentication-side device 201 receives the response to the standby state notification. The authentication-side device 201 executes the authentication processing, according to the authentication request included in the response to the standby state notification. The authentication-side device 201 acquires the physical terminal information of the authentication-side device 201. The authentication-side device 201 transmits the authentication result obtained by executing the authentication processing, including the acquired physical terminal information, to the relay control device 100. The relay control device 100 receives the authentication result.

(22:7) The relay control device 100 searches for a record of the state management table 500, using the physical terminal information included in the authentication result as a key. The relay control device 100 specifies the virtual machine 2 to be a destination, based on the virtual terminal information set to the searched record. The relay control device 100 transmits a response to an authentication request received in the past, including the received authentication result, to the specified virtual machine 2. As a result, even if the virtual machines are layered, the relay control device 100 can enable the virtual machine to acquire the authentication result obtained by executing the authentication processing by the authentication-side device 201.

### (Overall Processing Procedure of Second Operation Example)

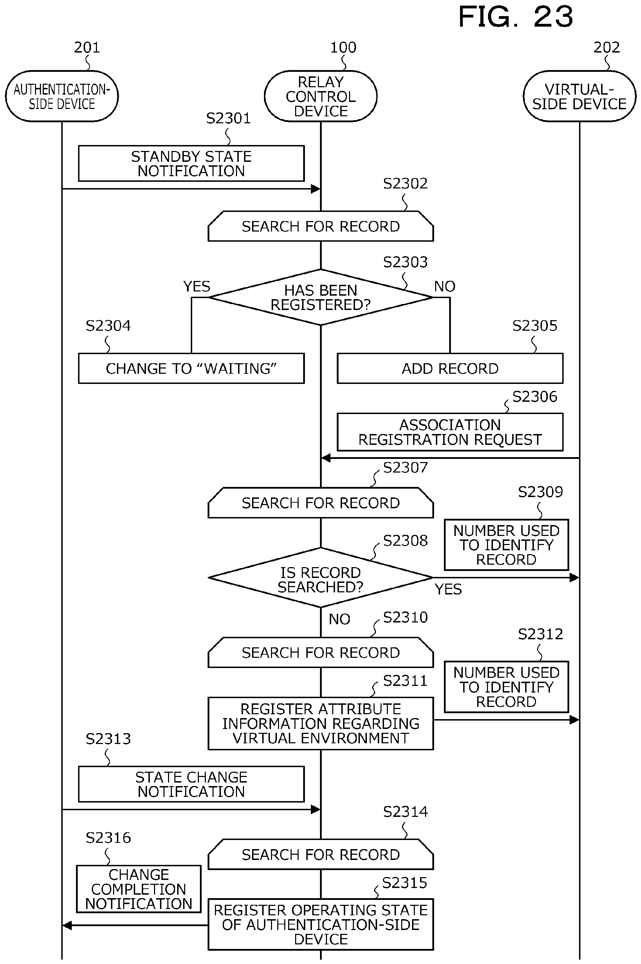

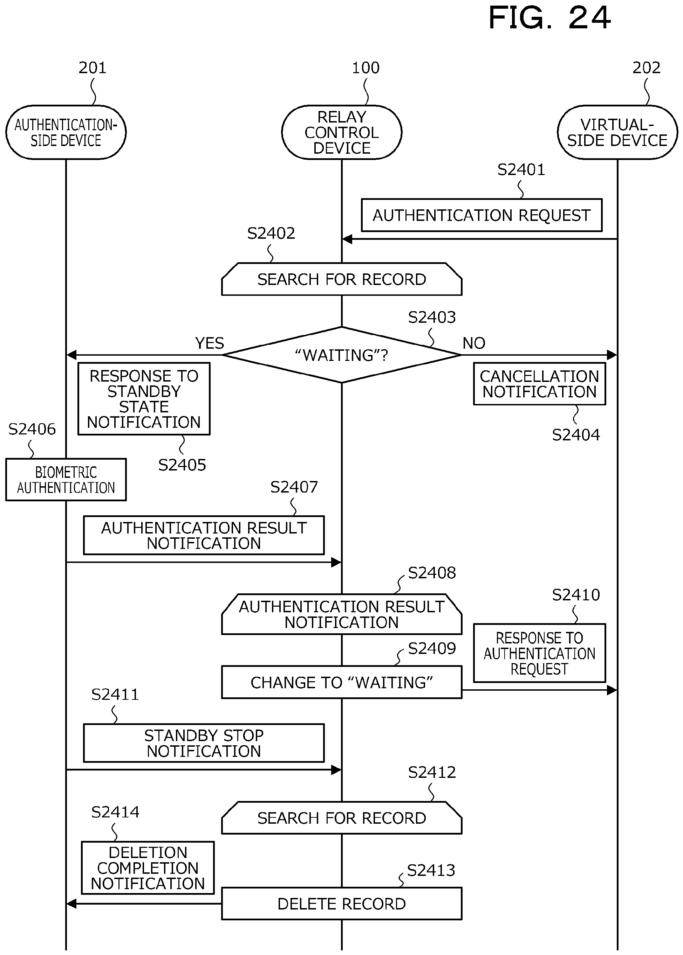

Next, an example of an overall processing procedure of the second operation example, executed by the information processing system 200 will be described with reference to FIGs. 23 and 24.

FIGs. 23 and 24 are sequence diagrams illustrating an example of the overall processing procedure of the second operation example. In FIG. 23, the authentication-side device 201 transmits the standby state notification including the attribute information regarding the authentication-side device 201, to the relay control device 100, based on a user's operation input (step S2301).

Upon receiving the standby state notification, the relay control device 100 searches for a record in which the attribute information regarding the authentication-side device 201 is registered, from the state management table 500, without transmitting the response to the standby state notification (step S2302). Then, the relay control device 100 determines whether or not the attribute information regarding the authentication-side device 201 has been registered in the record of the state management table 500, as a result of the search (step S2303).

Here, in a case where the attribute information has not been registered (step S2303: No), the relay control device 100 proceeds to processing in step S2305. On the other hand, in a case where the attribute information has been registered (step S2303: Yes), the relay control device 100 proceeds to processing in step S2304.

In step S2304, the relay control device 100 changes the state of the authentication-side device 201 registered in the searched record, to "waiting" (step S2304). Then, the relay control device 100 proceeds to processing in step S2307.

In step S2305, the relay control device 100 adds a record registered in association with the attribute information regarding the authentication-side device 201 and the state "waiting" of the authentication-side device 201, to the state management table 500 (step S2305). Then, the relay control device 100 proceeds to processing in step S2307.

Furthermore, the virtual-side device 202 transmits an association registration request including attribute information regarding a previous hop and attribute information regarding a specific virtual environment, based on a user's operation input in the specific virtual environment, to the relay control device 100 (step S2306). The attribute information regarding the previous hop is, for example, attribute information regarding the authentication-side device 201 using the specific virtual environment or attribute information regarding another virtual environment existing in the previous hop of the specific virtual environment.

Upon receiving the association registration request, the relay control device 100 searches for a record in which the attribute information regarding the specific virtual environment is registered, from the state management table 500 (step S2307). Then, the relay control device 100 determines whether or not the record is searched (step S2308).

Here, in a case where the record is searched (step S2308: Yes), the relay control device 100 proceeds to processing in step S2309. On the other hand, in a case where the record is not searched (step S2308: No), the relay control device 100 proceeds to processing in step S2310.

In step S2309, since the record is searched, the relay control device 100 determines that the virtual-side device 202 is in the first hop and transmits a number used to identify the searched record to the virtual-side device 202 (step S2309). Then, the relay control device 100 proceeds to processing in step S2310.

In step S2310, the relay control device 100 searches for a record in which the attribute information regarding the previous hop is registered, from the state management table 500 (step S2310). Next, the relay control device 100 registers the attribute information regarding the specific virtual environment, in association with the attribute information regarding the authentication-side device 201, in the searched record (step S2311). Then, the relay control device 100 transmits a number used to identify the searched record, to the virtual-side device 202 (step S2312).

Furthermore, in a case where the operating state of the own device changes, the authentication-side device 201 transmits the state change notification including the attribute information regarding the authentication-side device 201 and the operating state of the authentication-side device 201, to the relay control device 100 (step S2313). The relay control device 100 receives the state change notification.

Next, upon receiving the state change notification, the relay control device 100 searches for a record in which the attribute information regarding the authentication-side device 201 is registered (step S2314). Then, the relay control device 100 registers the operating state of the authentication-side device 201 in association with the attribute information regarding the authentication-side device 201, in the searched record (step S2315). Thereafter, the relay control device 100 transmits a change completion notification, to the authentication-side device 201 (step S2316). Next, description proceeds to FIG. 24.

In FIG. 24, the virtual-side device 202 transmits the authentication request including the attribute information regarding the authentication-side device 201 using the virtual environment and the number of the record, to the relay control device 100 (step S2401). The relay control device 100 receives the authentication request.

Next, upon receiving the authentication request, the relay control device 100 searches for a record in which the attribute information regarding the authentication-side device 201 is registered, from the state management table 500, without transmitting the response to the authentication request (step S2402). Then, the relay control device 100 determines whether or not the state of the authentication-side device 201 registered in the searched record is "waiting" (step S2403).

Here, in a case where the state of the authentication-side device 201 is "waiting" (step S2403: Yes), the relay control device 100 proceeds to processing in step S2405. On the other hand, in a case where the state of the authentication-side device 201 is not "waiting" (step S2403: No), the relay control device 100 proceeds to processing in step S2404.

In step S2404, the relay control device 100 transmits the cancellation notification, to the virtual-side device 202 (step S2404). Then, the information processing system 200 ends the overall processing.

In step S2405, the relay control device 100 transmits the response to the standby state notification, including the received authentication request, to the authentication-side device 201 and changes the state of the authentication-side device 201 registered in the searched record, to "authentication request in progress" (step S2405).

Furthermore, upon receiving the response to the standby state notification including the authentication request, the authentication-side device 201 executes biometric authentication (step S2406). Next, the authentication-side device 201 transmits an authentication result notification including the attribute information regarding the authentication-side device 201, to the relay control device 100 (step S2407). The relay control device 100 receives the authentication result notification.

Next, upon receiving the authentication result notification, the relay control device 100 searches for a record in which the attribute information regarding the authentication-side device 201 is registered, from the state management table 500 (step S2408). Then, the relay control device 100 changes the state of the authentication-side device 201 registered in the searched record, to "waiting" (step S2409). Thereafter, the relay control device 100 transmits the response to the authentication request, including the received authentication result notification, to the virtual-side device 202 (step S2410).

Next, in a case where the own device does not execute the biometric authentication thereafter, the authentication-side device 201 transmits the standby stop notification including the attribute information regarding the authentication-side device 201, to the relay control device 100 (step S2411). The relay control device 100 receives the standby stop notification.

Next, upon receiving the standby stop notification, the relay control device 100 searches for a record in which the attribute information regarding the authentication-side device 201 is registered, from the state management table 500 (step S2412). Then, the relay control device 100 deletes the searched record, from the state management table 500 (step S2413). Thereafter, the relay control device 100 transmits the deletion completion notification, to the authentication-side device 201 (step S2414). Then, the information processing system 200 ends the overall processing.

### (Third Operation Example of Information Processing System 200)

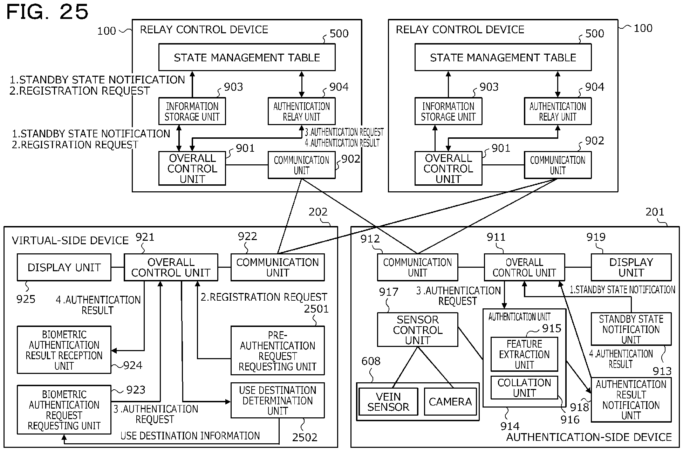

Next, a third operation example of the information processing system 200 will be described with reference to FIGs. 25 to 34. The first operation example is an operation example corresponding to a case where the single relay control device 100 is included in the information processing system 200. On the other hand, the third operation example is an operation example corresponding to a case where the plurality of relay control devices 100 included in the information processing system 200 exists.

In the following description, a case will be described where the two relay control devices 100 included in the information processing system 200 exist. First, for example, with reference to FIG. 25, a specific example of a functional configuration of the information processing system 200 in the third operation example will be described. In FIG. 25, a component same as that in FIG. 9 is denoted with the same reference numeral as in FIG. 9, and description thereof may be omitted.

FIG. 25 is an explanatory diagram illustrating a specific example of the functional configuration of the information processing system 200 in the third operation example. In FIG. 25, the information processing system 200 includes the two relay control devices 100, the authentication-side device 201, and the virtual-side device 202. Each relay control device 100 includes the state management table 500. Each relay control device 100 includes the overall control unit 901, the communication unit 902, the information storage unit 903, and the authentication relay unit 904.

The authentication-side device 201 includes an overall control unit 911, a communication unit 912, a standby state notification unit 913, and an authentication unit 914. The authentication unit 914 includes a feature extraction unit 915 and a collation unit 916. The authentication-side device 201 further includes a sensor control unit 917, an authentication result notification unit 918, and a display unit 919. The virtual-side device 202 includes an overall control unit 921, a communication unit 922, a biometric authentication request requesting unit 923, a biometric authentication result reception unit 924, and a display unit 925. The virtual-side device 202 further includes a pre-authentication request requesting unit 2501 and a use destination determination unit 2502.

The overall control unit 901 performs overall control of the relay control device 100. The overall control unit 901 communicates with the authentication-side device 201 and the virtual environment of the virtual-side device 202, using the communication unit 902. The communication unit 902 manages an interface between the relay control device 100 and the authentication-side device 201 or the virtual environment of the virtual-side device 202.

The overall control unit 901 receives an advance standby state notification including physical terminal information, from the authentication-side device 201, via the communication unit 902. The physical terminal information is attribute information regarding the authentication-side device 201. The overall control unit 901 outputs the advance standby state notification to the information storage unit 903. The information storage unit 903 stores the physical terminal information included in the advance standby state notification in the state management table 500, based on the advance standby state notification.

The overall control unit 901 receives a registration request including the physical terminal information and virtual terminal information, from the virtual environment of the virtual-side device 202, via the communication unit 902. The physical terminal information is attribute information regarding the authentication-side device 201 using the virtual environment of the virtual-side device 202. The virtual terminal information is attribute information regarding the virtual environment of the virtual-side device 202. The overall control unit 901 outputs the registration request to the information storage unit 903. The information storage unit 903 searches for a record of the state management table 500, using the physical terminal information included in the registration request as a key.

The information storage unit 903 associates the authentication-side device 201 with the virtual environment of the virtual-side device 202, by setting the virtual terminal information included in the registration request, to the searched record. For example, a change in the storage content of the state management table 500 will be specifically described below with reference to FIGs. 11 and 12. The information storage unit 903 outputs a number of the specified record to the overall control unit 901. The overall control unit 901 transmits the number of the record to the virtual environment of the virtual-side device 202, via the communication unit 902.

The overall control unit 901 receives a pre-authentication request including the number of the record, from the virtual environment of the virtual-side device 202, via the communication unit 902. The overall control unit 901 outputs the pre-authentication request to the authentication relay unit 904. The authentication relay unit 904 searches for a record of the state management table 500, using the number of the record included in the pre-authentication request as a key. The authentication relay unit 904 acquires physical terminal information set to the searched record. The authentication relay unit 904 outputs the acquired physical terminal information to the overall control unit 901. The overall control unit 901 specifies the authentication-side device 201 to be a destination, based on the physical terminal information. The overall control unit 901 transmits a response to the advance standby state notification, to the specified authentication-side device 201, via the communication unit 902.

The overall control unit 901 receives the standby state notification including the physical terminal information according to the response to the advance standby state notification, from the authentication-side device 201, via the communication unit 902. The physical terminal information is attribute information regarding the authentication-side device 201. The overall control unit 901 transmits a response to the pre-authentication request indicating that normal communication with the authentication-side device 201 can be performed, to the virtual environment to the virtual-side device 202, via the communication unit 902.

The overall control unit 901 receives an authentication request including the number of the record, according to the response to the pre-authentication request, from the virtual environment of the virtual-side device 202, via the communication unit 902. The overall control unit 901 outputs the authentication request to the authentication relay unit 904. The authentication relay unit 904 searches for a record of the state management table 500, using the number of the record included in the authentication request as a key. The authentication relay unit 904 acquires physical terminal information set to the searched record. The authentication relay unit 904 outputs the acquired physical terminal information to the overall control unit 901. The overall control unit 901 specifies the authentication-side device 201 to be a destination, based on the physical terminal information. The overall control unit 901 transmits the response to the waiting notification, including the received authentication request, to the specified authentication-side device 201, via the communication unit 902.

The overall control unit 901 receives an authentication result obtained by executing the authentication processing, including the physical terminal information, from the authentication-side device 201, via the communication unit 902. The overall control unit 901 outputs the authentication result to the authentication relay unit 904. The authentication relay unit 904 searches for a record of the state management table 500, using the physical terminal information included in the authentication result as a key. The authentication relay unit 904 acquires virtual terminal information set to the searched record. The authentication relay unit 904 outputs the acquired virtual terminal information to the overall control unit 901. The overall control unit 901 specifies a virtual environment of the virtual-side device 202 to be a destination, based on the virtual terminal information. The overall control unit 901 transmits a response to the authentication request, including the received authentication result, to the specified virtual environment of the virtual-side device 202, via the communication unit 902.

The overall control unit 911 performs overall control of the authentication-side device 201. The overall control unit 911 communicates with each relay control device 100, using the communication unit 912. The communication unit 912 manages an interface between the relay control device 100 and the authentication-side device 201.

The standby state notification unit 913 detects that the authentication-side device 201 is in the standby state. The standby state notification unit 913 detects that the authentication-side device 201 is in the standby state, for example, based on a user's operation input. The standby state notification unit 913 outputs to the overall control unit 911 that it is detected that the authentication-side device 201 is in the standby state. Upon receiving detection indicating that the authentication-side device 201 is in the standby state, the overall control unit 911 transmits the advance standby state notification including the physical terminal information, to each relay control device 100, via the communication unit 912.

The overall control unit 911 receives the response to the advance standby state notification, from at least any one of the relay control devices 100, via the communication unit 912. The overall control unit 911 transmits a new standby state notification, to the relay control device 100 that has transmitted the response to the advance standby state notification, among the plurality of relay control devices 100, via the communication unit 912.

The overall control unit 911 receives the authentication request from the relay control device 100, via the communication unit 912. The overall control unit 911 outputs the received authentication request to the authentication unit 914. Upon receiving the authentication request, the authentication unit 914 acquires the biometric information obtained by the sensor device 608, using the sensor control unit 917. The authentication unit 914 extracts a feature included in the acquired biometric information, using the feature extraction unit 915 and outputs the feature to the collation unit 916. The collation unit 916 executes the authentication processing, based on the feature included in the biometric information. The authentication unit 914 outputs an authentication result obtained by executing the authentication processing by the collation unit 916, to the authentication result notification unit 918. The authentication result notification unit 918 transmits the authentication result obtained by executing the authentication processing, including the physical terminal information, to the overall control unit 911. The overall control unit 911 transmits the authentication result obtained by executing the authentication processing, including the physical terminal information, to the relay control device 100, via the communication unit 912. For example, the display unit 919 displays the authentication result.

The overall control unit 921 performs overall control of the virtual environment of the virtual-side device 202. The overall control unit 921 communicates with each relay control device 100, using the communication unit 922. The communication unit 922 manages an interface between the relay control device 100 and the virtual environment of the virtual-side device 202.

The overall control unit 921 transmits a registration request including the physical terminal information and the virtual terminal information, to the relay control device 100, via the communication unit 922. The pre-authentication request requesting unit 2501 outputs a trigger to transmit the pre-authentication request, to the overall control unit 921, based on a user's operation input. The overall control unit 921 transmits the pre-authentication request including the physical terminal information, to the relay control device 100, via the communication unit 922. The overall control unit 921 receives the response to the pre-authentication request, from at least any one of the relay control devices 100, via the communication unit 922.

Upon receiving the response to the pre-authentication request, the biometric authentication request requesting unit 923 outputs a trigger to transmit the authentication request, to the overall control unit 921. The use destination determination unit 2502 sets the relay control device 100 that has transmitted the response to the pre-authentication request first, among the plurality of relay control devices 100, as a use destination. The overall control unit 921 transmits the authentication request including the physical terminal information, to the relay control device 100 set as the use destination, via the communication unit 922.

The overall control unit 921 receives the authentication result, via the communication unit 922. The overall control unit 921 outputs the authentication result, to the biometric authentication result reception unit 924. The biometric authentication result reception unit 924 executes login processing, based on the authentication result. For example, the display unit 925 displays the authentication result. For example, the display unit 925 displays an execution result obtained by executing the login processing.

Here, a case has been described where the registration request and the pre-authentication request are different pieces of information. However, the present invention is not limited to this. For example, there may be a case where the authentication request includes a pre-registration request. Furthermore, here, a case has been described where the authentication-side device 201 includes the collation unit 916 and executes the authentication processing. However, the present invention is not limited to this. For example, as in FIG. 10, there may be a case where the authentication-side device 201 does not include the collation unit 916.

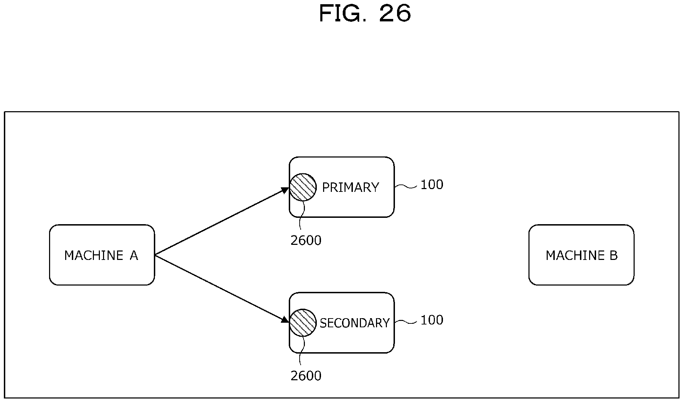

Next, a specific example of the third operation example of the information processing system 200 will be described with reference to FIGs. 26 to 34.

FIGs. 26 to 34 are explanatory diagrams illustrating a specific example of the third operation example of the information processing system 200. In FIGs. 26 to 34, the information processing system 200 includes the machine A to be the authentication-side device 201, the two relay control devices 100, and the machine B to be the virtual-side device 202. The machine B includes a virtual environment. It is assumed that a user use the virtual environment of the machine B, with the machine A. In the following description, there is a case where one of the two relay control devices 100 is referred to as a "primary 100" and another relay control device 100 is referred to as a "secondary 100".

In FIG. 26, the machine A transitions to the standby state, for example, based on a user's operation input. Furthermore, the machine A acquires physical terminal information of the machine A, generates an advance standby state notification including the acquired physical terminal information, and transmits the advance standby state notification to each relay control device 100.

Each relay control device 100 receives the advance standby state notification. Each relay control device 100 registers the physical terminal information included in the received advance standby state notification and the state "waiting", in the state management table 500. Each relay control device 100 transitions to a state where waiting is performed without transmitting a response 2600 to the received advance standby state notification to the machine A.

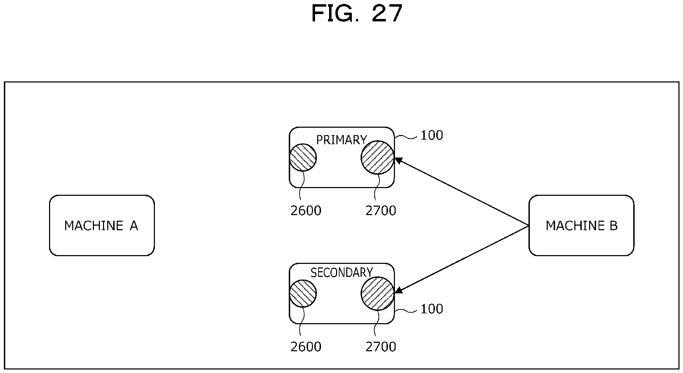

The response 2600 includes, for example, information indicating correspondence with the advance standby state notification. Specifically, the response 2600 includes a session ID same as the advance standby state notification, and it is preferable to grasp that the response 2600 corresponds to the advance standby state notification, in the relay control device 100 and on a communication path from the relay control device 100 to the machine A. In other words, the response 2600 can be transmitted through a communication path of the advance standby state notification, in an opposite direction to the advance standby state notification. As a result, each relay control device 100 can maintain a state where the relay control device 100 can actively communicate with the machine A, using the response 2600. Next, description proceeds to FIG. 27.

In FIG. 27, the virtual environment of the machine B acquires virtual terminal information and the physical terminal information of the machine A using the virtual environment, based on a user's operation input, generates a pre-authentication request including the acquired virtual terminal information and physical terminal information, and transmits the pre-authentication request to each relay control device 100. Each relay control device 100 receives the pre-authentication request. Upon receiving the pre-authentication request, each relay control device 100 transitions to a state where waiting is performed without transmitting a response 2700 to the pre-authentication request, to the virtual environment of the machine B.

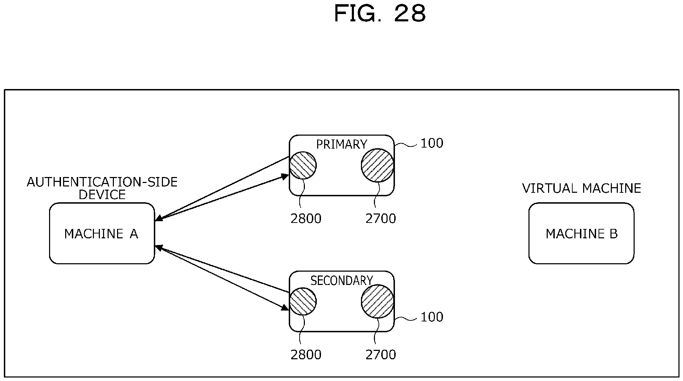

The response 2700 includes, for example, information indicating correspondence to the pre-authentication request. Specifically, the response 2700 includes a session ID same as the pre-authentication request, and it is preferable to grasp that the response 2700 corresponds to the pre-authentication request, in the relay control device 100 or on a communication path from the relay control device 100 to the virtual environment of the machine B. In other words, the response 2700 can be transmitted through the communication path of the pre-authentication request, in an opposite direction to the pre-authentication request. As a result, each relay control device 100 can maintain a state where the relay control device 100 can actively communicate with the virtual environment of the machine B, using the response 2700. Next, description proceeds to FIG. 28.

In FIG. 28, each relay control device 100 searches for a record of the state management table 500, using the physical terminal information included in the received pre-authentication request as a key and specifies the machine A to be a destination. Each relay control device 100 registers the virtual terminal information included in the received pre-authentication request, in the searched record. If the state "waiting" is set to the searched record, the relay control device 100 transmits the response 2600 to the advance standby state notification, to the specified machine A.

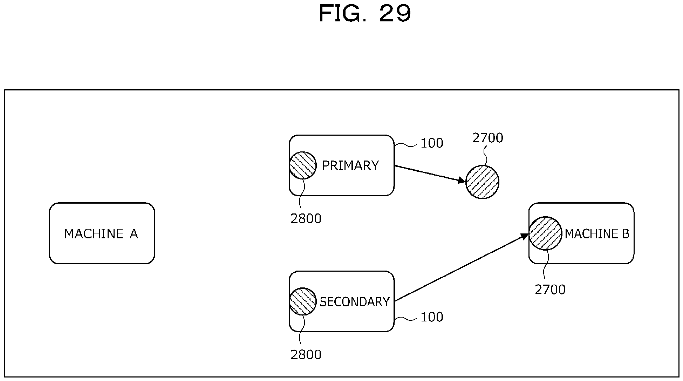

Upon receiving the response 2600 to the advance standby state notification, the machine A transmits an actual standby state notification to the relay control device 100 that has transmitted the response 2600 to the advance standby state notification, among the plurality of relay control devices 100. Any one of relay control devices 100 receives the actual standby state notification. The relay control device 100 that has received the actual standby state notification determines that a communication state with the machine A is normal. The relay control device 100 that has received the actual standby state notification transitions to a state where waiting is performed without transmitting a response 2800 to the actual standby state notification to the machine A. As a result, each relay control device 100 can confirm whether or not the communication state with the machine A is normal. Next, description proceeds to FIG. 29.

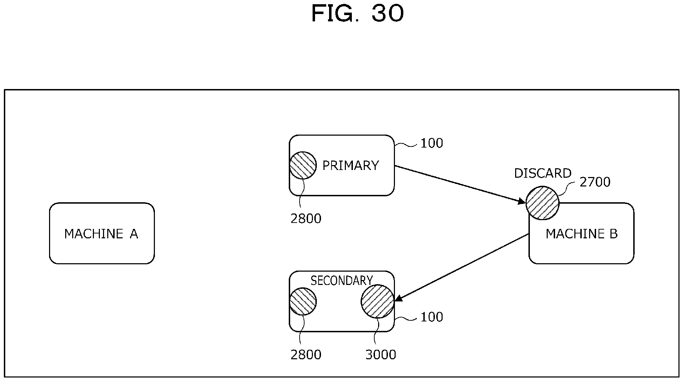

In FIG. 29, the relay control device 100 that has received the actual standby state notification transmits the response 2700 to the pre-authentication request, to the virtual environment of the machine B. The virtual environment of the machine B sets the relay control device 100 that has transmitted the response 2700 to the pre-authentication request first, among the plurality of relay control devices 100, as a use destination to which the authentication request is transmitted. In the example in FIG. 29, the virtual environment of the machine B selects the secondary 100 as the use destination. Next, description proceeds to FIG. 30.

In FIG. 30, the virtual environment of the machine B acquires the virtual terminal information and the physical terminal information of the machine A using the virtual environment, generates the authentication request including the acquired virtual terminal information and physical terminal information, and transmits the authentication request to the secondary 100 selected as the use destination. In a case of receiving the response 2700 to the pre-authentication request from the primary 100 later, the virtual environment of the machine B discards the response 2700 to the pre-authentication request. The secondary 100 receives the authentication request. Upon receiving the authentication request, the secondary 100 transitions to a state where waiting is performed without transmitting a response 3000 to the authentication request, to the virtual environment of the machine B.

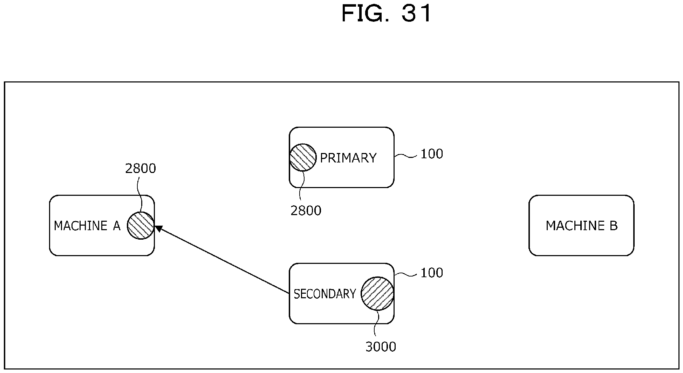

The response 3000 includes, for example, information indicating correspondence to the authentication request. Specifically, the response 3000 includes a session ID same as the authentication request, and it is preferable to grasp that the response 3000 corresponds to the authentication request, in the secondary 100 or a communication path from the secondary 100 to the virtual environment of the machine B. In other words, the response 3000 can be transmitted through the communication path of the authentication request, in an opposite direction to the authentication request. As a result, the secondary 100 can maintain a state where the secondary 100 can actively communicate with the virtual environment of the machine B, using the response 3000. Next, description proceeds to FIG. 31.

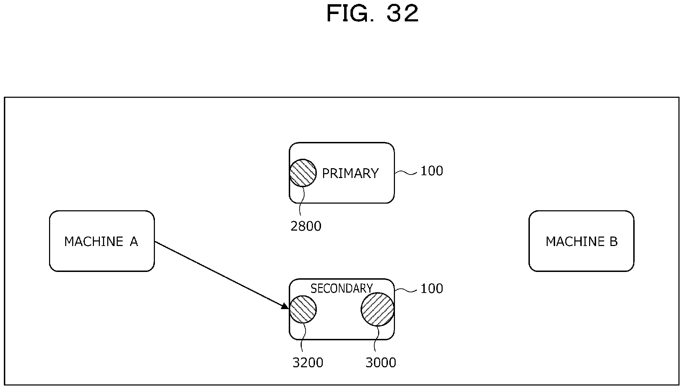

In FIG. 31, the secondary 100 searches for a record of the state management table 500, using the physical terminal information included in the received authentication request as a key, and specifies the machine A to be a destination. If the state "waiting" is set to the searched record, the secondary 100 transmits the response 2800 to the actual standby state notification, including the received authentication request, to the specified machine A. As a result, the secondary 100 can enable the machine A to acquire the authentication request, regardless of a coupling environment with the machine A. Next, description proceeds to FIG. 32.

In FIG. 32, the machine A receives the response 2800 to the actual standby state notification. The machine A extracts an authentication request included in the response 2800 to the actual standby state notification, and executes the authentication processing according to the extracted authentication request. The machine A acquires the physical terminal information of the machine A. The machine A transmits an authentication result obtained by executing the authentication processing, including the acquired physical terminal information, to the secondary 100. The secondary 100 receives the authentication result. The secondary 100 transitions to a state where waiting is performed without transmitting a response 3200 to the received authentication result, to the machine A.

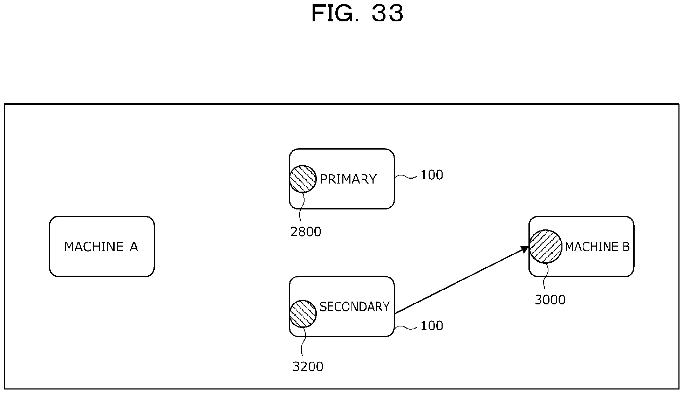

The response 3200 includes, for example, information indicating correspondence to the authentication result. Specifically, the response 3200 includes a session ID same as the authentication result, and it is preferable to grasp that the response 3200 corresponds to the authentication result, in the secondary 100 or on the communication path from the secondary 100 to the machine A. In other words, the response 3200 can be transmitted through the communication path of the authentication result, in an opposite direction to the authentication result. As a result, the secondary 100 can maintain a state where the secondary 100 can actively communicate with the machine A, using the response 3200. Next, description proceeds to FIG. 33.

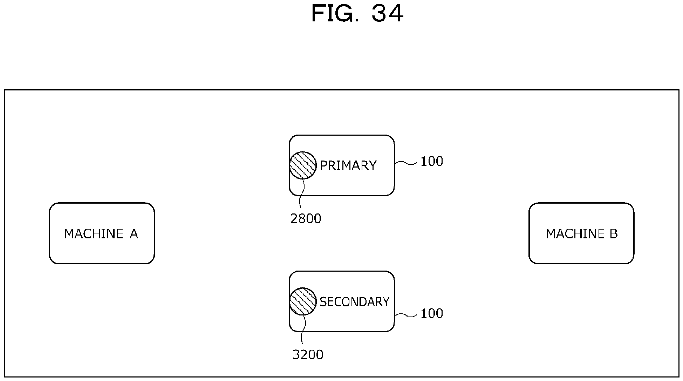

In FIG. 33, the secondary 100 searches for a record of the state management table 500, using the physical terminal information included in the authentication result as a key. The secondary 100 specifies the virtual environment of the machine B to be a destination, based on the virtual terminal information set to the searched record. The secondary 100 transmits the response 3000 to the authentication request, including the authentication result, to the specified virtual environment of the machine B. As a result, the secondary 100 can enable the virtual environment of the machine B to appropriately acquire the authentication result, in response to the authentication request. Next, description proceeds to FIG. 34.

In FIG. 34, each relay control device 100 receives the pre-authentication request or the authentication request again and transitions to a state where the relay control device 100 can transfer the pre-authentication request or the authentication request to the machine A. As a result, each relay control device 100 can repeat various types of operations in FIGs. 26 to 34. In this way, the information processing system 200 can make the relay control device 100 be redundant, can take measures against a failure of the relay control device 100 and a failure of the communication path, and can improve stability of the information processing system 200.

Here, for example, a method is considered in which the primary 100 notifies the secondary 100 of the global IP address of the machine A or the like and is synchronized with the secondary 100 so as to make the relay control device 100 be redundant. This method has a problem such that it is difficult for the secondary 100 to actively communicate with the machine A, even if the secondary 100 grasps the global IP address of the machine A. For example, since a router of the Internet does not have a record regarding the secondary 100 in a routing table, it is not possible for the router to transfer data output by the secondary 100 to the machine A. On the other hand, the information processing system 200 can make the relay control device 100 be redundant, can take measures against the failure of the relay control device 100, and can improve the stability of the information processing system 200.

### (Overall Processing Procedure of Third Operation Example)

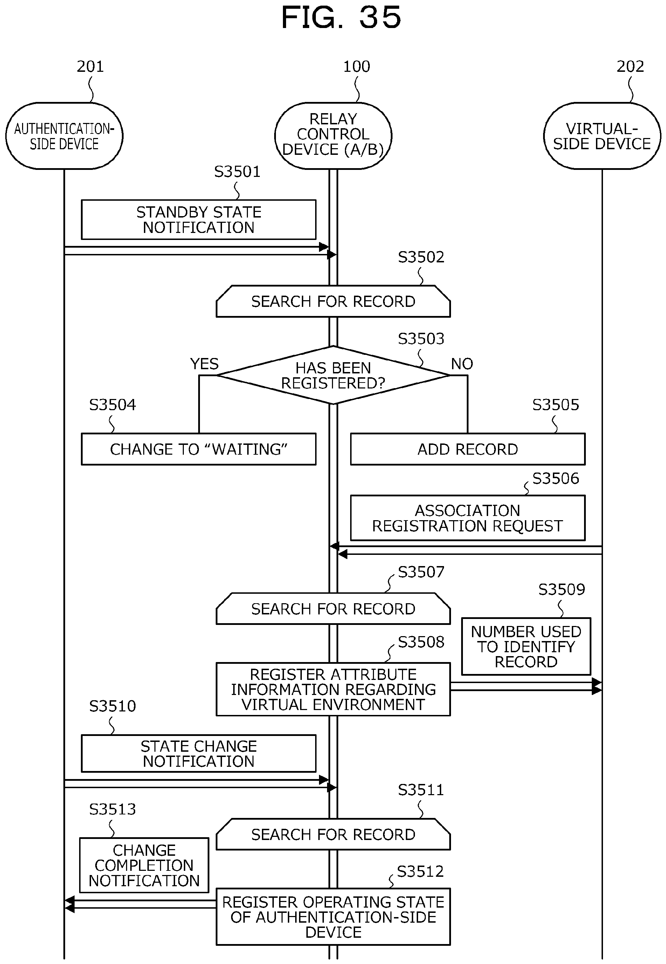

Next, an example of an overall processing procedure of the third operation example, executed by the information processing system 200 will be described with reference to FIGs. 35 to 37.

FIGs. 35 to 37 are sequence diagrams illustrating an example of the overall processing procedure of the third operation example. In FIG. 35, the authentication-side device 201 transmits the standby state notification including the attribute information regarding the authentication-side device 201, to each relay control device 100, based on a user's operation input (step S3501).

Upon receiving the standby state notification, each relay control device 100 searches for a record in which the attribute information regarding the authentication-side device 201 is registered, from the state management table 500, without transmitting the response to the standby state notification (step S3502). Then, each relay control device 100 determines whether or not the attribute information regarding the authentication-side device 201 has been registered in the record of the state management table 500, as a result of the search (step S3503).

Here, in a case where the attribute information has not been registered (step S3503: No), the relay control device 100 proceeds to processing in step S3505. On the other hand, in a case where the attribute information has been registered (step S3503: Yes), the relay control device 100 proceeds to processing in step S3504.

In step S3504, each relay control device 100 changes the state of the authentication-side device 201 registered in the searched record, to "waiting" (step S3504). Then, each relay control device 100 proceeds to processing in step S3507.

In step S3505, each relay control device 100 adds a record registered in association with the attribute information regarding the authentication-side device 201 and the state "waiting" of the authentication-side device 201, to the state management table 500 (step S3505). Then, each relay control device 100 proceeds to processing in step S3507.

Furthermore, the virtual-side device 202 transmits an association registration request including the attribute information regarding the virtual environment and the attribute information regarding the authentication-side device 201 using the virtual environment, to each relay control device 100, based on a user's operation input (step S3506).

Each relay control device 100 searches for a record in which the attribute information regarding the authentication-side device 201 is registered, from the state management table 500 (step S3507). Next, each relay control device 100 registers the attribute information regarding the virtual environment, in association with the attribute information regarding the authentication-side device 201, in the searched record (step S3508). Then, each relay control device 100 transmits a number used to identify the searched record, to the virtual-side device 202 (step S3509).

Furthermore, in a case where an operating state of the own device changes, the authentication-side device 201 transmits the state change notification including the attribute information regarding the authentication-side device 201 and the operating state of the authentication-side device 201, to each relay control device 100 (step S3510).

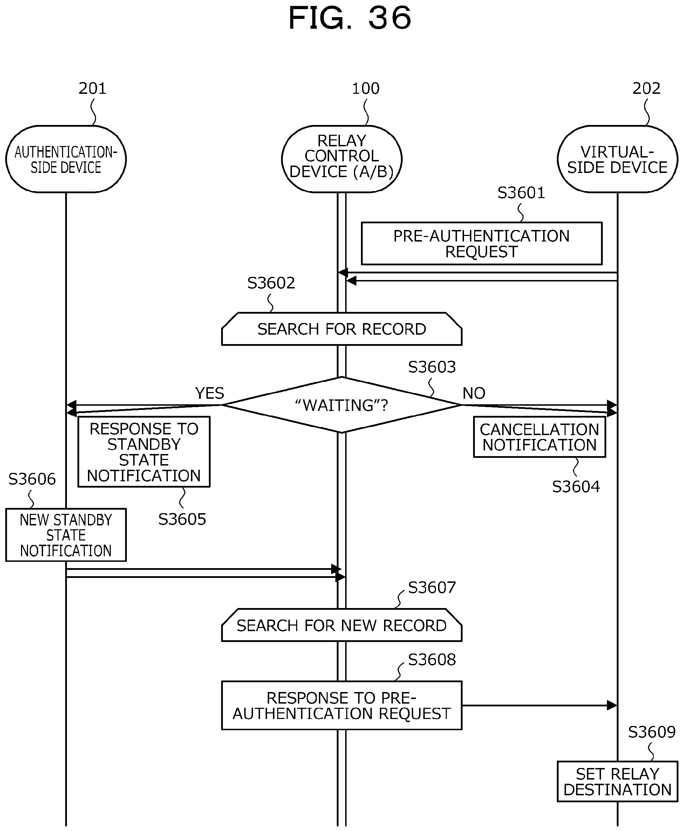

Furthermore, upon receiving the state change notification, each relay control device 100 searches for a record in which the attribute information regarding the authentication-side device 201 is registered (step S3511). Next, each relay control device 100 registers the operating state of the authentication-side device 201 in association with the attribute information regarding the authentication-side device 201, in the searched record (step S3512). Then, each relay control device 100 transmits the change completion notification to the authentication-side device 201 (step S3513). Next, description proceeds to FIG. 36.

In FIG. 36, the virtual-side device 202 transmits the pre-authentication request including the attribute information regarding the authentication-side device 201 using the virtual environment and the number of the record, to each relay control device 100 (step S3601).

Furthermore, upon receiving the pre-authentication request, each relay control device 100 searches for a record in which the attribute information regarding the authentication-side device 201 is registered, from the state management table 500, without transmitting the response to the pre-authentication request (step S3602). Next, each relay control device 100 determines whether or not the state of the authentication-side device 201 registered in the searched record is "waiting" (step S3603).

Here, in a case where the state of the authentication-side device 201 is "waiting" (step S3603: Yes), the relay control device 100 proceeds to processing in step S3605. On the other hand, in a case where the state of the authentication-side device 201 is not "waiting" (step S3603: No), the relay control device 100 proceeds to processing in step S3604.

In step S3604, each relay control device 100 transmits the cancellation notification to the virtual-side device 202 (step S3604). Then, the information processing system 200 ends the overall processing.

In step S3605, each relay control device 100 transmits the response to the standby state notification, to the authentication-side device 201 (step S3605).

Furthermore, upon receiving the response to the standby state notification, the authentication-side device 201 transmits a new standby state notification including the attribute information regarding the authentication-side device 201, to each relay control device 100 (step S3606).

Furthermore, upon receiving the new standby state notification, each relay control device 100 searches for a record in which the attribute information regarding the authentication-side device 201 is registered, from the state management table 500 (step S3607). Next, each relay control device 100 transmits the response to the pre-authentication request to the virtual-side device 202 (step S3608).

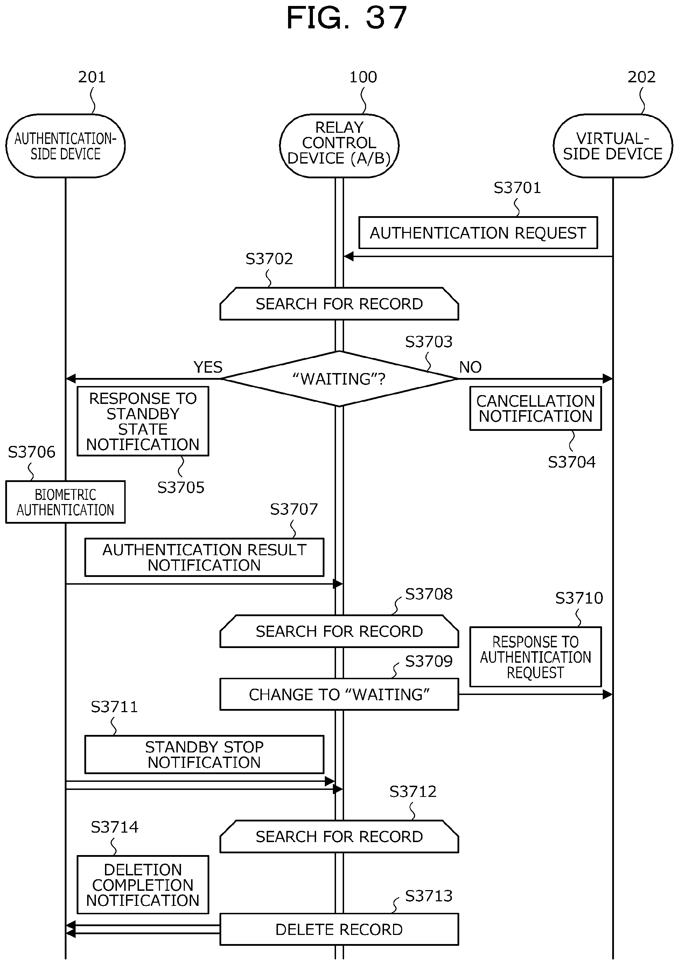

Then, the authentication-side device 201 sets the relay control device 100 that has received the response to the pre-authentication request first, as a relay destination (step S3609). Next, description proceeds to FIG. 37.

In FIG. 37, the virtual-side device 202 transmits the authentication request including the attribute information regarding the authentication-side device 201 using the virtual environment and the number of the record, to the relay control device 100 set as the relay destination (step S3701).

Next, upon receiving the authentication request, the relay control device 100 searches for a record in which the attribute information regarding the authentication-side device 201 is registered, from the state management table 500, without transmitting the response to the authentication request (step S3702). Then, the relay control device 100 determines whether or not the state of the authentication-side device 201 registered in the searched record is "waiting" (step S3703).

Here, in a case where the state of the authentication-side device 201 is "waiting" (step S3703: Yes), the relay control device 100 proceeds to processing in step S3705. On the other hand, in a case where the state of the authentication-side device 201 is not "waiting" (step S3703: No), the relay control device 100 proceeds to processing in step S3704.

In step S3704, the relay control device 100 transmits the cancellation notification, to the virtual-side device 202 (step S3704). Then, the information processing system 200 ends the overall processing.

In step S3705, the relay control device 100 transmits the response to the standby state notification, including the received authentication request, to the authentication-side device 201 and changes the state of the authentication-side device 201 registered in the searched record, to "authentication request in progress" (step S3705).

Furthermore, upon receiving the response to the standby state notification including the authentication request, the authentication-side device 201 executes biometric authentication (step S3706). Then, the authentication-side device 201 transmits an authentication result notification including the attribute information regarding the authentication-side device 201, to the relay control device 100 (step S3707). The relay control device 100 receives the authentication result notification.

Furthermore, upon receiving the authentication result notification, the relay control device 100 searches for a record in which the attribute information regarding the authentication-side device 201 is registered, from the state management table 500 (step S3708). Next, the relay control device 100 changes the state of the authentication-side device 201 registered in the searched record, to "waiting" (step S3709). Then, the relay control device 100 transmits the response to the authentication request, including the received authentication result notification, to the virtual-side device 202 (step S3710).

Furthermore, in a case where the own device does not execute the biometric authentication thereafter, the authentication-side device 201 transmits the standby stop notification including the attribute information regarding the authentication-side device 201, to each relay control device 100 (step S3711). Each relay control device 100 receives the standby stop notification.

Furthermore, upon receiving the standby stop notification, each relay control device 100 searches for a record in which the attribute information regarding the authentication-side device 201 is registered, from the state management table 500 (step S3712). Next, each relay control device 100 deletes the searched record, from the state management table 500 (step S3713). Then, each relay control device 100 transmits the deletion completion notification, to the authentication-side device 201 (step S3714). Thereafter, the information processing system 200 ends the overall processing.

As described above, according to the relay control device 100, it is possible to receive the waiting notification from the first device 101 that can provide the authentication function. Upon receiving the waiting notification, the relay control device 100 can transition to a state waiting is performed without transmitting the response to the waiting notification, to the first device 101. According to the relay control device 100, it is possible to receive the authentication request from the second device 102 having the virtual environment. According to the relay control device 100, in a case of a state where the authentication request is received and waiting is performed without transmitting the response to the waiting notification, it is possible to transmit the response to the received waiting notification to the first device 101. As a result, the relay control device 100 can enable the virtual environment to use the authentication function, and can enable the virtual environment to transmit the authentication request to the first device 101, regardless of the coupling environment between the first device 101 and the second device 102.

According to the relay control device 100, upon receiving the authentication request, it is possible to transition to a state where waiting is performed without transmitting the response to the authentication request to the second device 102. According to the relay control device 100, it is possible to receive the authentication result using the authentication function, from the first device 101. According to the relay control device 100, in a case of a state where the authentication result is received and waiting is performed without transmitting the response to the authentication request, it is possible to transmit the response to the received authentication request, including the received authentication result, to the second device 102. As a result, it is possible to for the relay control device 100 to transmit the authentication result from the first device 101 to the virtual environment, regardless of the coupling environment between the first device 101 and the second device 102.

According to the relay control device 100, in a case of a state where the authentication request is received and waiting is performed without transmitting the response to the waiting notification, it is possible to determine whether or not the attribute information included in the received waiting notification and the attribute information included in the received authentication request match. According to the relay control device 100, if the pieces of attribute information match, it is possible to transmit the response to the received waiting notification, including the received authentication request, to the first device 101. As a result, even if the plurality of devices that can be the first device 101 exists, the relay control device 100 can specify which one of the first devices 101 should be set as a destination, and can appropriately transmit the authentication request.

According to the relay control device 100, it is possible to receive the state notification indicating the state of the first device 101, from the first device 101. According to the relay control device 100, in a case of a state where the authentication request is received and waiting is performed without transmitting the response to the waiting notification, it is possible to determine whether or not the state of the first device 101 satisfies the predetermined condition, based on the received state notification. According to the relay control device 100, when it is determined that the predetermined condition is satisfied, it is possible to transmit the response to the received waiting notification, including the received authentication request, to the first device 101. As a result, the relay control device 100 can transmit the authentication request to the first device 101, at an appropriate timing according to the state of the first device 101, while maintaining the state where the relay control device 100 can transmit the authentication request to the first device 101.

According to the first device 101, when the response to the waiting notification transmitted to the relay control device 100 times out, it is possible to repeat the operation for retransmitting the waiting notification to the relay control device 100 the predetermined number of times. As a result, the first device 101 can make the relay control device 100 maintaining a state where the relay control device 100 can transmit the authentication request to the first device 101.

According to the first device 101, it is possible to communicate with the fourth device having the authentication function. As a result, the first device 101 can be applied to a case where the fourth device does not have the authentication function.

According to the first device 101, it is possible to provide the authentication function for executing the authentication processing using the biometric information. As a result, the first device 101 can enable the virtual environment to use the authentication function using the biometric information.

The relay control device 100 can be applied to a case of communicating with the first device 101 via the VPN. As a result, even in a case of communicating with the first device 101 via the VPN, the relay control device 100 can actively transmit the authentication request to the first device 101.

According to the relay control device 100, it is possible to acquire the response to the waiting notification, including the identification information indicating that the response is the response to the waiting notification. As a result, the relay control device 100 can transmit the response to the waiting notification through the communication path where the waiting notification is transmitted, in an opposite direction, and can make the response appropriately arrive at the first device 101.

According to the relay control device 100, it is possible to acquire the response to the authentication request, including the identification information indicating that the response is the response to the authentication request. As a result, the relay control device 100 can transmit the response to the authentication request through the communication path where the authentication request is transmitted, in an opposite direction and can make the response appropriately arrive at the second device 102.

According to the first device 101, it is possible to transmit the advance notification to each of the plurality of relay control devices 100. According to the first device 101, it is possible to receive the response to the advance notification, from at least any one of the plurality of relay control devices 100. According to the first device 101, it is possible to transmit the waiting notification, to the relay control device 100 that has received the response to the advance notification, among the plurality of relay control devices 100. According to the second device 102, it is possible to transmit the confirmation request for confirming the communication state with the first device 101, to each of the plurality of relay control devices 100. According to the second device 102, it is possible to receive the response to the confirmation request, indicating that the communication state with the first device 101 is normal, from at least any one of the plurality of relay control devices 100. According to the second device 102, it is possible to transmit the authentication request to any one of the plurality of relay control devices 100 that has received the response to the confirmation request. According to each relay control device 100, it is possible to transition to a state where waiting is performed without transmitting the response to the advance notification to the first device 101, upon receiving the advance notification from the first device 101. According to each relay control device 100, in a case of a state where the confirmation request is received from the second device 102 and waiting is performed without transmitting the response to the advance notification, it is possible to transmit the response to the advance notification, to the first device 101. According to each relay control device 100, it is possible to transition to a state where waiting is performed without transmitting the response to the waiting notification to the first device 101, upon receiving the waiting notification from the first device 101. According to each relay control device 100, if the waiting notification is received from the first device 101 and the communication state with the first device 101 is normal, it is possible to transmit the response to the confirmation request, to the second device 102. According to each relay control device 100, in a case of a state where the authentication request is received and waiting is performed without transmitting the response to the waiting notification, it is possible to transmit the response to the received waiting notification, including the received authentication request, to the first device 101. As a result, it is possible for the information processing system 200 to make the relay control device 100 be redundant and to improve the stability.

According to the second device 102, it is possible to transmit the authentication request, to the relay control device 100 that has received the response to the confirmation request first, among the plurality of relay control devices 100. As a result, the second device 102 can execute the authentication processing relatively quickly. Furthermore, even if there is the relay control device 100 that does not transmit the response to the confirmation request, the second device 102 can normally operate.

Note that the relay control method described in the present embodiment may be implemented by executing, in a computer such as a PC or a workstation, a program prepared in advance. The relay control program described in the present embodiment is executed by being recorded on a computer-readable recording medium and being read from the recording medium by the computer. The recording medium is a hard disk, a flexible disk, a compact disc (CD)-ROM, a magneto optical disc (MO), a digital versatile disc (DVD), or the like. Furthermore, the relay control program described in the present embodiment may be distributed via a network such as the Internet.

### REFERENCE SIGNS LIST

- 100: relay control device
- 101: first device
- 102: second device
- 110: network configuration
- 111: in-house computer
- 112: router
- 113: VPN device
- 114: external computer
- 200: information processing system
- 201: authentication-side device
- 202: virtual-side device
- 210: network
- 220: in-house network
- 400, 600, 700: bus
- 401, 601, 701: CPU
- 402, 602, 702: memory
- 403, 603, 703: network I/F
- 404, 604, 704: recording medium I/F
- 405, 605, 705: recording medium
- 500: state management table
- 606: display
- 607: input device
- 608: sensor device
- 800: first storage unit
- 801: first acquisition unit
- 802: first generation unit
- 803: first output unit
- 810: second storage unit
- 811: second acquisition unit
- 812: second generation unit
- 813: second output unit
- 820: third storage unit
- 821: third acquisition unit
- 822: third generation unit
- 823: third output unit
- 901, 911, 921: overall control unit
- 902, 912, 922, 1002: communication unit
- 903: information storage unit
- 904: authentication relay unit
- 913: standby state notification unit
- 914: authentication unit
- 915: feature extraction unit
- 916, 1001: collation unit
- 917: sensor control unit
- 918: authentication result notification unit
- 919, 925: display unit
- 923: biometric authentication request requesting unit
- 924: biometric authentication result reception unit
- 1000: user DB
- 1400, 1500, 1700, 2600, 2700, 2800, 3000, 3200: response
- 2101, 2102: desktop screen
- 2501: pre-authentication request requesting unit
- 2502: use destination determination unit

## Claims

1. A relay control method in which a computer executes processing comprising:
receiving a waiting notification, from a first device that is capable of providing an authentication function;
upon receiving the waiting notification, transitioning to a state where waiting is performed without transmitting a response to the waiting notification to the first device;
receiving an authentication request from a second device that has a virtual environment; and
in a case of a state where the authentication request is received and waiting is performed without transmitting the response to the waiting notification, transmitting the response to the received waiting notification, that includes the received authentication request, to the first device.

2. The relay control method according to claim 1, in which the computer executes processing comprising:
upon receiving the authentication request, transitioning to a state where waiting is performed without transmitting a response to the authentication request to the second device;
receiving an authentication result obtained by using the authentication function, from the first device; and
in a case of a state where the authentication result is received and waiting is performed without transmitting the response to the authentication request, transmitting the response to the received authentication request, that includes the received authentication result, to the second device.

3. The relay control method according to claim 1 or 2, wherein
the waiting notification includes attribute information regarding the first device,
the authentication request includes attribute information regarding a third device that uses the virtual environment, and
the processing of transmitting the response to the waiting notification,
in a case of a state where the authentication request is received and waiting is performed without transmitting the response to the waiting notification, when the attribute information included in the received waiting notification matches the attribute information included in the received authentication request, transmits the response to the received waiting notification, that includes the received authentication request, to the first device.

4. The relay control method according to any one of claims 1 to 3, in which the computer executes processing comprising:
receiving a state notification that indicates a state of the first device, from the first device, wherein
the processing of transmitting the response to the waiting notification
in a case of a state where the authentication request is received and waiting is performed without transmitting the response to the waiting notification, when it is determined that the state of the first device satisfies a predetermined condition, based on the received state notification, transmits the response to the received waiting notification, that includes the received authentication request, to the first device.

5. The relay control method according to any one of claims 1 to 4, wherein when the response to the waiting notification transmitted to the computer times out, the first device repeats an operation to re-transmit the waiting notification to the computer a predetermined number of times.

6. The relay control method according to any one of claims 1 to 5, wherein the first device is communicable with a fourth device that has the authentication function.

7. The relay control method according to any one of claims 1 to 6, wherein the authentication function executes authentication processing by using biometric information.

8. The relay control method according to any one of claims 1 to 7, wherein the computer communicates with the first device via a virtual private network (VPN).

9. The relay control method according to any one of claims 1 to 8, wherein the response to the waiting notification further includes identification information that indicates that the response is the response to the waiting notification.

10. The relay control method according to claim 2, wherein the response to the authentication request further includes identification information that indicates that the response is the response to the authentication request.

11. The relay control method according to any one of claims 1 to 10, in which the computer executes processing comprising:
receiving an advance notification, from the first device;
when the advance notification is received, transitioning to a state where waiting is performed without transmitting a response to the advance notification, to the first device;
receiving a confirmation request used to confirm a communication state with the first device, from the second device;
in a case of a state where the confirmation request is received and waiting is performed without transmitting the response to the advance notification, transmitting the response to the received advance notification, to be a waiting notification transmission request, to the first device; and
when the waiting notification according to the response to the advance notification is received, when the communication state with the first device is normal, transmitting a response to the confirmation request, that indicates that the communication state with the first device is normal, to the second device, wherein
the processing of receiving the authentication request
receives the authentication request according to the response to the confirmation request.

12. A relay control program that causes a computer to execute a process, the process comprising:
receiving a waiting notification from a first device that is capable of providing an authentication function;
when receiving the waiting notification, transition to a state where waiting is performed without transmitting a response to the waiting notification to the first device;
receiving an authentication request, from a second device that has a virtual environment; and
in a case of a state where the authentication request is received and waiting is performed without transmitting the response to the waiting notification, transmitting the response to the received waiting notification, that includes the received authentication request, to the first device.

13. A relay control device comprising:
a control unit configured to
receive a waiting notification from a first device that is capable of providing an authentication function,
when receiving the waiting notification, transition to a state where waiting is performed without transmitting a response to the waiting notification to the first device,
receive an authentication request, from a second device that has a virtual environment, and
in a case of a state where the authentication request is received and waiting is performed without transmitting the response to the waiting notification, transmit the response to the received waiting notification, that includes the received authentication request, to the first device.

14. An information processing system comprising: a first device configured to be capable of providing an authentication function; a second device configured to include a virtual environment; and a relay control device configured to be capable of communicating with the first device and the second device, wherein
the first device
transmits a waiting notification to the relay control device,
the second device
transmits an authentication request to the relay control device, and
the relay control device,
when receiving the waiting notification from the first device, transitions to a state where waiting is performed without transmitting a response to the waiting notification to the first device, and
in a case of a state where the authentication request is received from the second device and waiting is performed without transmitting the response to the waiting notification, transmits the response to the waiting notification received from the first device, that includes the received authentication request, to the first device.

15. An information processing system comprising: a first device configured to be capable of providing an authentication function; a second device configured to include a virtual environment; and a plurality of relay control devices configured to be capable of communicating with the first device and the second device, wherein
the first device
transmits an advance notification to each of the plurality of relay control devices,
receives a response to the advance notification from at least any one of the plurality of relay control devices, and
transmits a waiting notification to the relay control device that has received the response to the advance notification, among the plurality of relay control devices,
the second device
transmits a confirmation request used to confirm a communication state with the first device to each of the plurality of relay control devices,
receives a response to the confirmation request that indicates that the communication state with the first device is normal, from at least any one of the plurality of relay control devices, and
transmits an authentication request to any one of the plurality of relay control devices that has received the response to the confirmation request and
each of the plurality of relay control devices,
when receiving the advance notification from the first device, transitions to a state where waiting is performed without transmitting the response to the advance notification to the first device,
in a case of a state where the confirmation request is received from the second device and waiting is performed without transmitting the response to the advance notification, transmits the response to the advance notification to the first device,
when receiving the waiting notification from the first device, transitions to a state where waiting is performed without transmitting a response to the waiting notification to the first device,
when the waiting notification is received from the first device and the communication state with the first device is normal, transmits the response to the confirmation request that indicates that the communication state with the first device is normal, to the second device, and
in a case of a state where the authentication request is received from the second device and waiting is performed without transmitting the response to the waiting notification, transmits the response to the waiting notification received from the first device, that includes the received authentication request, to the first device.

16. The information processing system according to claim 15, wherein
the second device
transmits the authentication request to the relay control device that has received the response to the confirmation request first, among the plurality of relay control devices.
